# EUROPEAN PATENT SPECIFICATION

(11) **EP 3 295 731 B1**
(45) Date of publication and mention of the grant of the patent: **08.07.2020**
(21) Application number: 16728414.0
(22) Date of filing: 09.05.2016
(51) Int. Cl.: H04W 64/00, G01S 5/02, H04W 4/02

(54) **APPARATUSES AND METHODS THEREIN FOR POSITIONING MEASUREMENTS**
VORRICHTUNGEN UND VERFAHREN DARIN FÜR POSITIONSMESSUNGEN
APPAREILS ET PROCÉDÉS EN LEUR SEIN DE MESURES DE POSITIONNEMENT

(30) Priority: 13.05.2015 US 201562160630 P
(43) Date of publication of application: 21.03.2018
(73) Proprietor: Telefonaktiebolaget LM Ericsson (publ), 164 83 Stockholm (SE)
(72) Inventor: MODARRES RAZAVI, Sara, 583 32 Linköping (SE); GUNNARSSON, Fredrik, 587 50 Linköping (SE); ZAIDI, Ali, 177 32 Järfälla (SE); RYDÉN, Henrik, 169 52 Solna (SE); WANG, Meng, 174 66 Sundbyberg (SE); BLANKENSHIP, Yufei, Kildeer, Illinois 60047 (US)
(74) Representative: Zacco Sweden AB
(86) International application number: PCT/SE2016/050414
(87) International publication number: WO 2016/182495

(56) References cited:
- EP-A1- 2 797 347
- WO-A1-2011/062654
- WO-A1-2012/099517
- US-A1- 2012 040 696
- US-A1- 2015 018 010
- "3rd Generation Partnership Project; Technical Specification Group Radio Access Network; Evolved Universal Terrestrial Radio Access Network (E-UTRAN); Stage 2 functional specification of User Equipment (UE) positioning in E-UTRAN (Release 12)", 3GPP STANDARD; 3GPP TS 36.305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.2.0, 31 December 2014 (2014-12-31), pages 1-59, XP050927381, [retrieved on 2014-12-31]
- "3rd Generation Partnership Project; Technical Specification Group Radio Access Network; Study on indoor positioning enhancements for UTRA and LTE (Release 13)", 3GPP STANDARD; 3GPP TR 37.857, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V13.1.0, 7 December 2015 (2015-12-07), pages 1-82, XP051047399, [retrieved on 2015-12-07]

## Description

### TECHNICAL FIELD

Embodiments herein relate to apparatuses and methods therein for positioning measurements in a wireless communications network. In particular they relate to measurements of time differences between reference signals.

### BACKGROUND

Communication devices such as Mobile Stations (MS) are also known as e.g. User Equipments (UE), mobile terminals, and wireless terminals. Mobile stations are enabled to communicate wirelessly in a wireless communications network or wireless communication system, sometimes also referred to as a cellular radio system or cellular networks. The communication may be performed e.g. between two mobile stations, between a mobile station and a regular telephone and/or between a mobile station and a server via a Radio Access Network (RAN) and possibly one or more core networks, comprised within the wireless communications network.

Examples of wireless communication systems are Long Term Evolution (LTE), Universal Mobile Telecommunications System (UMTS) and Global System for Mobile communications (GSM).

Mobile stations may further be referred to as mobile telephones, cellular telephones, laptops, or surf plates with wireless capability, just to mention some further examples. The mobile stations in the present context may be, for example, portable, pocket-storable, hand-held, computer-comprised, or vehicle-mounted mobile devices, enabled to communicate voice and/or data, via the RAN, with another entity, such as another mobile station or a server.

The wireless communications network covers a geographical area which is divided into cell areas, wherein each cell area being served by an access node such as a Base Station (BS), e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the mobile stations within range of the base stations. In the context of this disclosure, the expression Downlink (DL) is used for the transmission path from the base station to the mobile station. The expression Uplink (UL) is used for the transmission path in the opposite direction i.e. from the mobile station to the base station.

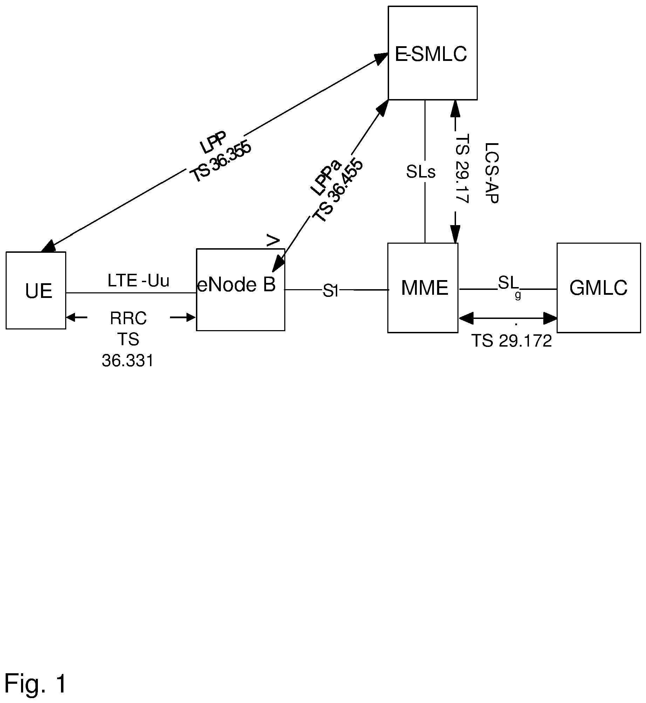

Positioning in LTE is supported by an architecture depicted in **Figure 1**, with direct interactions between a UE and a location server, such as an Evolved-Serving Mobile Location Centre (E-SMLC), via the LTE Positioning Protocol (LPP). Moreover, there are also interactions between the location server and an eNB via the LPPa protocol, to some extent supported by interactions between the eNB and the UE via the Radio Resource Control (RRC) protocol.

The following positioning techniques maybe used in LTE (3GPP TS 36.305):
- Enhanced Cell ID. This technique uses cell ID information to associate the UE to a serving area of a serving cell, and then uses some additional information to determine a finer granularity position.
- Assisted Global Navigation Satellite System (GNSS). This technique uses GNSS information retrieved by the UE, supported by assistance information provided to the UE from the E-SMLC.
- Observed Time Difference Of Arrival (OTDOA). The UE estimates the time difference of reference signals from different base stations and sends the time difference to the E-SMLC for multilateration. Multilateration is a navigation technique based on the measurement of the difference in distance to two stations, such as base stations, at known locations that broadcast signals at known times.
- Uplink TDOA (UTDOA). The UE is requested to transmit a specific waveform that is detected by multiple location measurement units, e.g. an eNB, at known positions. These measurements are forwarded to the E-SMLC for multilateration
   Observed Time Difference Of Arrival (OTDOA) is a UE-assisted method, in which the UE measures Time Of Arrival (TOA) of specific Positioning Reference Signals (PRS) from multiple eNBs, and then computes relative differences of the TOAs. The computed relative differences are referred to as Reference Signal Time Difference (RSTD) measurements.

Based on these measurements positioning today comes in two flavors: i) the location server computes the position of the UE based on the RSTD measurements provided from the UE. In order to perform the measurements the UE is supported by the assistance data provided from the location server, and ii) the UE computes the position based on the RSTD measurements and the assistance data provided from the location server.

In the first scenario the E-SMLC may request through the LPP layer an OTDOA measurement: a set of RSTD measurements from the UE. The request is implemented with a RequestLocationInformation message. Together with this request the UE receives assistance data. This assistance data, provides a list of cells, which are associated with eNBs, that the UE is supposed to measure on. Together with the list of cells the location server also provides the UE with the Positioning Reference Signal (PRS) parameters, including bandwidth, periodicity etc of the cells.

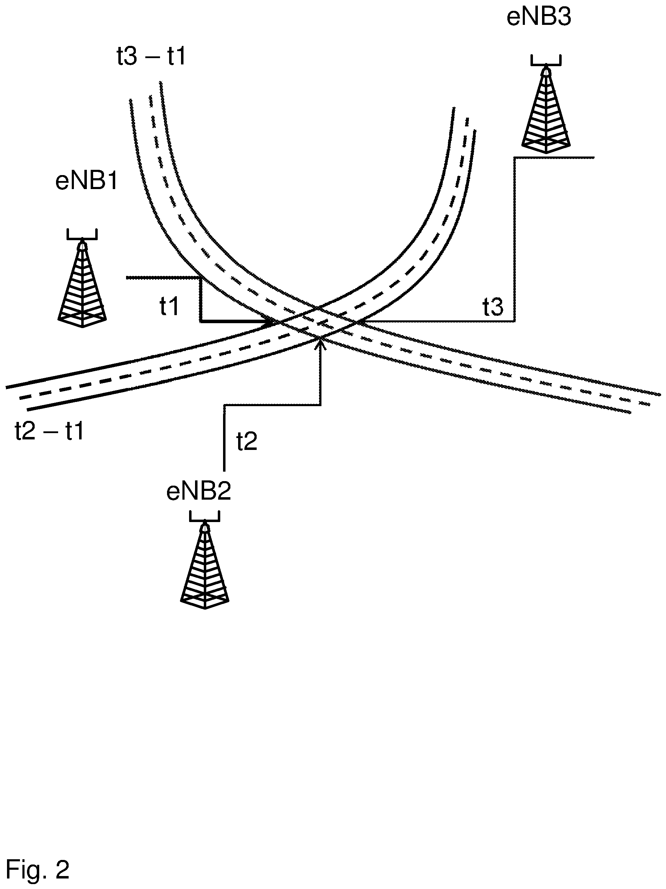

These RSTDs are then quantized and reported via LPP to the E-SMLC together with an accuracy assessment. Based on known positions of eNBs and their mutual time synchronization, it is possible for the E-SMLC to estimate the UE position from the RSTD measurements using multilateration. The accuracy depends on the radio conditions of the received signals, number of received signals as well as the deployment, which means that it will vary spatially. **Figure 2** illustrates the multilateration in OTDOA while considering eNB1 as serving as reference cell.

The RSTD measurements are the time difference of arrival between the PRS of one neighbor cell and the PRS of the reference cell measured by the UE. The location server should include at least one cell for which the SFN may be obtained by the target UE, e.g. the serving cell, in the assistance data, either as the assistance data reference cell or in the neighbour cell list. Otherwise the target UE will be unable to perform the OTDOA measurement and the positioning operation will fail as described in 3GPP TS 36.355 (V_{12.4.0}).

Conventionally the serving cell is chosen by the location server as the reference cell, since it is the strongest cell, and the UE measures the RSTD based on the serving cell as the reference cell after having received a reference cell indication from the location server. This may be a problem in some scenarios. This is specifically an issue while considering indoor UEs which have more severe multipath issues and also may be covered by far outdoor macro cells. For example, while considering a cell with a relatively high TOA error as the reference cell, all the RSTD measurements will be impacted by this high TOA error, resulting in poor position estimation by the OTDOA method.

EP2797347A1 discloses a positioning method including notifying a terminal of difference threshold information; receiving cell subset information that is determined by the terminal according to the difference threshold information, where the cell subset information is used to indicate a cell pair whose reference signal measured value exceeds the difference threshold, or the cell subset information is used to indicate a cell pair whose reference signal measured value does not exceed the difference threshold; determining a configuration of a PRS according to the cell subset information, and notifying the terminal of the configuration of the PRS; and receiving an RSTD that is obtained by the terminal through measurement according to the configuration of the PRS, and determining a location of the terminal according to the RSTD.

WO2012099517A1 discloses a method in a user equipment for performing positioning measurement comprises receiving positioning assistance data from a positioning node. The positioning assistance data comprises a plurality of reference cells, wherein each reference cell may be associated with at least one respective frequency, and a set of neighbor cells comprising at least one neighbor cell.

US20120040696A1 discloses a method of grouping cells of a radio communications network may include defining first and second groups of cells from a plurality of cells that transmit reference signals for positioning measurements.

US20150018010A1 discloses embodiments pertaining to the obtaining and utilization of Observed Time Difference of Arrival (OTDOA) assistance data. Cell timing information obtained based on measurements by a Mobile Station (MS) of neighbor cells may comprise cell timing offsets of the neighbor cells relative to a serving cell for the MS. OTDOA assistance data may be generated, where the OTDOA assistance data may comprise an OTDOA assistance data reference cell and a cell timing offset between the serving cell and an OTDOA assistance data reference cell, the reference cell being selected based on the received neighbor cell measurements.

WO2011062654A1 discloses the background art related to method and apparatus for enhancement of cell ID-based position determination in TD-SCDMA multimode terminals.

### SUMMARY

The invention is defined by the independent claims. Furthermore, embodiments of the invention are defined by the claims. An object of embodiments herein is to improve the positioning accuracy for a wireless communications device, e.g. when using OTDOA.

According to a first aspect there is presented a method performed by a wireless communications device for positioning of the wireless communications device in a wireless communications network, wherein the wireless communications network comprises a serving cell and neighbour cells. The method comprises obtaining information related to a cell selection process for selecting a cell to be used for computing a position of the wireless signal associated with the cell to be selected. The method comprises selecting the cell to be used for computing the position of the wireless communications device based on the information related to the cell selection process. The method comprises computing a difference of the measures based on the selected cell.

According to an embodiment the information related to the cell selection process is Selection Strategy Information (SSI).

According to an embodiment the information related to the cell selection process indicates to the wireless communications device a mechanism to select any one or more out of a reference cell and neighbour cells.

According to an embodiment the mechanism is based on observed conditions at the wireless communications device at a time when the position of the wireless communications device is computed.

According to an embodiment computing the position of the wireless communications device comprises computing a difference of the measure of the signal associated with the cell to be selected and a second measure of a second signal associated with a second cell.

According to an embodiment the second cell is selected to be used for computing the position of the wireless communications device.

According to an embodiment the difference of the measures is a Reference Signal Time Difference (RSTD).

According to an embodiment the measure of the signal is a Time Of Arrival (TOA).

According to an embodiment the information related to the cell selection process indicates to the wireless communications device to select as reference cell that cell that corresponds to a minimum TOA.

According to an embodiment the information related to the cell selection process indicates to the wireless communications to select neighbor cells with the TOA in relation to a threshold.

According to an embodiment the information related to the cell selection process is provided by a network node configured to assist the wireless communication device with positioning measurements.

According to an embodiment the cell to be used for computing the position of the wireless communications device is selected based on the measure of the signal associated with the cell to be selected.

According to an embodiment the method further comprises providing the computed difference of the measures to the network node for the network node to compute the position of the wireless communications device based on the computed difference of the measures.

According to an embodiment the method further comprises computing the position of the wireless communications device based on the computed difference of the measures.

According to an embodiment the method further comprises providing the network node with information related to the cell selection.

According to an embodiment the information related to the cell selection comprises an indication of the selected cell, or an indication of a selection strategy used to select the cell.

According to an embodiment the selection strategy indicates to the wireless communications device to select neighbor cells based on its current serving cell.

According to an embodiment the information related to the cell selection process indicates to the wireless communications device which cells not to be candidates for selection as reference cell.

According to an embodiment the information related to the cell selection process indicates to the wireless communications device which cells are candidates for selection as reference cell.

According to an embodiment the information related to the cell selection process indicates to the wireless communications device an ordered list of cells that are candidates for selection as reference cell, wherein the list is ordered according to priority of the cells.

According to a second aspect there is presented a wireless communications device for positioning of the wireless communications device in a wireless communications network, wherein the wireless communications network comprises a serving cell and neighbour cells. The wireless communications device comprises a processor. The processor is configured to cause the wireless communications device to obtain information related to a cell selection process for selecting a cell to be used for computing a position of the wireless communications device. The processor is configured to cause the wireless communications device to measure a measure of a signal associated with the cell to be selected. The processor is configured to cause the wireless communications device to select the cell to be used for computing the position of the wireless communications device based on the information related to the cell selection process. The processor is configured to cause the wireless communications device to compute a difference of the measures based on the selected cell.

According to a third aspect there is presented a wireless communications device for positioning of the wireless communications device in a wireless communications network, wherein the wireless communications network comprises a serving cell and neighbour cells. The wireless communications device comprises an obtain module configured to obtain information related to a cell selection process for selecting a cell to be used for computing a position of the wireless communications device. The wireless communications device comprises a measure module configured to measure a measure of a signal associated with the cell to be selected. The wireless communications device comprises a select module configured to select the cell to be used for computing the position of the wireless communications device based on the information related to the cell selection process. The wireless communications device comprises a compute module configured to compute a difference of the measures based on the selected cell.

According to a fourth aspect there is computer program product for positioning of a wireless communications device in a wireless communications network, wherein the wireless communications network comprises a serving cell and neighbour cells, the computer program comprising instructions which, when run on a processor of the wireless communications device, causes wireless communications device to perform a method according to the first aspect.

According to a fifth aspect there is presented a method performed by a network node for positioning of a wireless communications device in a wireless communications network, wherein the wireless communications network comprises a serving cell and neighbour cells. The method comprises determining information related to a cell selection process for selecting a cell to be used for computing a position of the wireless communications device. The method comprises providing the information related to the cell selection process to the wireless communications device. The method comprises obtaining a difference of a measure of a signal associated with the cell to be selected and a second measure of a second signal associated with a second cell. The method comprises computing the position of the wireless communications device based on the difference of the measures.

According to an embodiment the method further comprises muting certain cell transmissions when other cells are transmitting.

According to an embodiment the information related to the cell selection process indicates to the wireless communications device to select the cell based on a signal strength condition.

According to a sixth aspect there is presented a network node for positioning of a wireless communications device in a wireless communications network, wherein the wireless communications network comprises a serving cell and neighbour cells. The network node comprises a processor. The processor is configured to cause the network node to determine information related to a cell selection process for selecting a cell to be used for computing a position of the wireless communications device. The processor is configured to cause the network node to provide the information related to the cell selection process to the wireless communications device. The processor is configured to cause the network node to obtain a difference of a measure of a signal associated with the cell to be selected and a second measure of a second signal associated with a second cell. The processor is configured to cause the network node to compute the position of the wireless communications device based on the difference of the measures.

According to an seventh aspect there is presented a network node for positioning of a wireless communications device in a wireless communications network, wherein the wireless communications network comprises a serving cell and neighbour cells. The network node comprises a determine module configured to determine information related to a cell selection process for selecting a cell to be used for computing a position of the wireless communications device. The network node comprises a provide module configured to provide the information related to the cell selection process to the wireless communications device. The network node comprises an obtain module configured to obtain a difference of a measure of a signal associated with the cell to be selected and a second measure of a second signal associated with a second cell. The network node comprises a compute module configured to compute the position of the wireless communications device based on the difference of the measures.

According to a eighth aspect there is presented a computer program product for positioning of a wireless communications device in a wireless communications network, wherein the wireless communications network comprises a serving cell and neighbour cells, the computer program comprising instructions which, when run on a processor of a network node, causes the network node toto perform a method according to the fifth aspect.

An advantage with embodiments herein is that they provide a systematic approach for improving the selection of cells used for positioning.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Figure 1 illustrates architecture for supporting positioning in LTE;
Figure 2 illustrates multilateration in OTDOA while considering eNB1 as serving as reference cell;
Figure 3 is a schematic block diagram depicting a wireless communications network;
Figures 4, 8, and 9 are signalling diagrams according to embodiments;

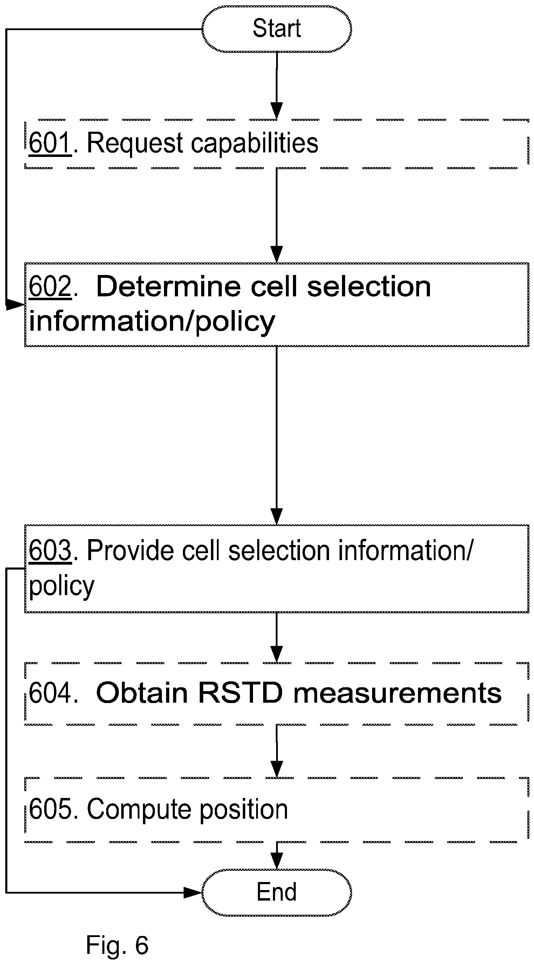

Figures 5 and 6 are flowchart diagrams according to embodiments;
Figure 7 schematically illustrates a scenario with two possible base stations for reference cell selection according to embodiments;
Figure 10 is a schematic illustration of a wireless communications device according to an embodiment; and
Figure 11 is a schematic illustration of a network node according to an embodiment.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

As part of developing embodiments herein, a problem will first be identified and discussed.

A problem with prior art lies in the selection of the reference cell and the neighbor cells used for computing the RSTD measurements. In prior art the location server usually selects the serving cell of the UE as the reference cell, since it is the strongest cell, and a set of strongest neighbor cells as neighbor cells. The choice of the reference cell and the neighbor cells are very critical as all the RSTD measurements are based on the selections of these cells. Thus, in prior art the location server explicitly indicates to the UE the cell to be used as the reference cell and one or more cells are explicitly indicated as neighbor cells.

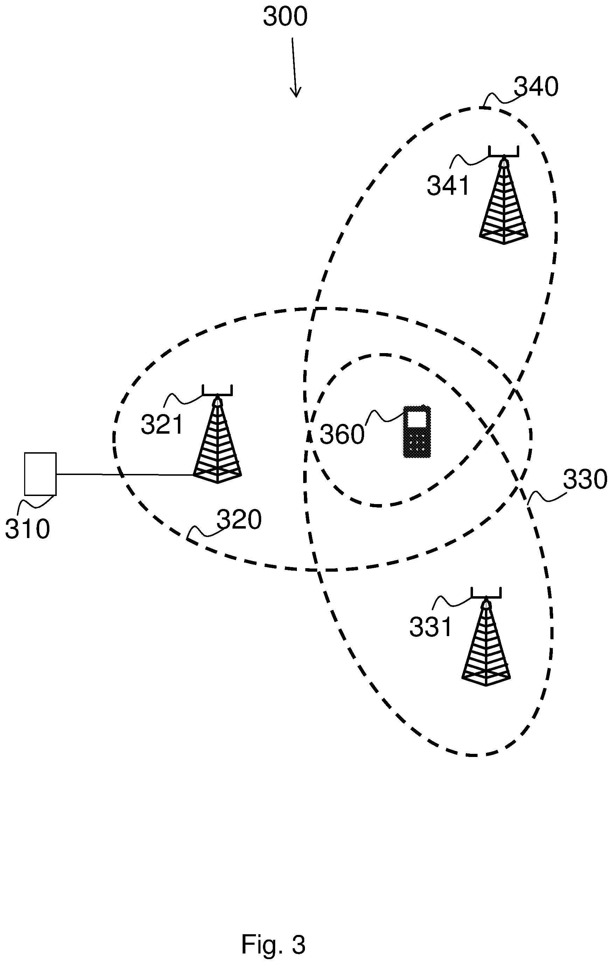

As illustrated in Figure 3, the intersection between the TOA differences, e.g. t2-t1 and t3-t1, is used for the position estimation of the UE. Although, the serving cell is the strongest cell for the UE, it is not always the best choice of reference cell for the targeted UE. This is specifically an issue while considering the indoor UEs which have more severe multipath issues and also may be covered by far outdoor macro cells. For example, while considering a cell with a relatively high TOA error as the reference cell, all the RSTD measurements will be impacted by this choice, resulting in poor position estimation by the OTDOA method.

Another problem with prior art is that sometimes the list of neighbour cells provided to the UE from the location server is so long that the UE does not have time to measure all of the TOAs associated with the cells.

Therefore, in embodiments herein a systematic procedure of selecting a proper reference cell and neighbor cells are vital. Since the UE has access to measurements related to the cells and the quality of the signals associated with the cells, the UE is used to select the cells. The location server may assist the UE with information related to how to select the cells in order to obtain better positioning accuracy by OTDOA. In other words, the location server may indicate to the UE the mechanism to select the reference cell, e.g. based on the observed conditions at the UE at the time of RSTD computations. Such information relating to the cell selection process for positioning may also be referred to as a cell selection information, a cell selection policy, a cell selection strategy, a cell selection strategy policy or a Selection Strategy Information (SSI). This information will hereafter be referred to as the SSI. The SSI may for example comprise an indication to use a certain strategy/policy and/or a complete strategy/policy. An example of such an SSI is an indication that the UE shall select the reference cell based on which cell that corresponds to a minimum TOA. This is in contrast to prior art.

The UE may indicate to the location server whether the selection of the reference cell and/or neighbor cells have been based on the strategy policy or not. In this way the location server may evaluate the cell selection process and possibly update the information that it assists the UE with.

Embodiments herein may further improve the positioning by selecting neighbor cells to be measured for positioning purposes from a larger set of neighbor cells, e.g. provided from the location server. This selection may comprise a prioritization among the neighbor cells such that the UE has time to measure on the most prioritized neighbor cells. Thus, the information related to how to select the cells mentioned above may comprise information related to how to select the neighbor cells. An example of an SSI for the neighbor cells is an indication that the UE shall select a certain number of neighbor cells with the TOA above or below certain threshold. The number of neighbor cells to be selected may also be selected according to some strategy. The number of neighbor cells may for example be dependent on the quality of the received signals associated with the cells in the neighbor list of the UE.

Embodiments herein relate to wireless communication networks in general. **Figure 3** is a schematic block diagram depicting **a wireless communications network 300** also known as a radio communications network, a telecommunications network or similar. The wireless communications network 300 may comprise one or more Radio Access Networks (RAN) and one or more Core Networks (CN). The wireless communications network 300 may use a number of different technologies, such as Long Term Evolution (LTE), LTE-Advanced, Wideband Code Division Multiple Access (WCDMA), Global System for Mobile communications/Enhanced Data rate for GSM Evolution (GSM/EDGE), Worldwide Interoperability for Microwave Access (WiMAX), BLE, Wi-Fi or Ultra Mobile Broadband (UMB), just to mention a few possible implementations. The wireless communications network 300 maybe any 3GPP wireless communications network, or any cellular wireless communications network or system in which positioning of wireless devices with the use of cell measurements is performed. Embodiments herein will be exemplified with LTE.

Network nodes capable of communicating with wireless communications devices, operate in the wireless communications network 300. For example, **a network node 310** operate in the wireless communications network 100 which network node 310 is capable of communicating with wireless communications devices. The network node 310 is configured to operate in the wireless communications network 300. The network node 310 may be configured to assist wireless communications devices with measurements related to positioning and to compute the position of wireless communications devices. The network node 310 may be a location server, e.g. an E-SMLC in LTE.

The wireless communications network 300 covers a geographical area which may be divided into cell areas, e.g. **a cell 320** being served by **a base station 321.** A cell is a geographical area where radio coverage is provided by radio base station equipment at a base station site or at remote locations in Remote Radio Units (RRU). The cell areas may comprise further cells, such as **a second cell 330** being served by **a second base station 331** and **a third cell 340** served by **a third base station 341.** There may of course be more than three cells and three base stations operating in the wireless communications network 300.

**A wireless communications device 360**, also known as a mobile station, wireless device, a user equipment and/or a wireless terminal, is configured to operate in the wireless communications network 300. For example, the wireless communications device 360 may communicate with the wireless communications network 300 via radio network nodes, such as the base station 321. The wireless communications device 360 may for example communicate with the network node 310 via the base station 321. There may of course be more than one wireless communications device in the wireless communications network 300.

It should be understood by the person skilled in the art that "wireless communications device" is a non-limiting term which means any wireless terminal, user equipment, Machine Type Communication (MTC) device or UE or a device or UE capable of machine to machine communication, a Device to Device (D2D) terminal or UE, or node e.g. Personal Digital Assistant (PDA), laptop, mobile, sensor, relay, mobile tablets or even a small base station.

The user equipment 360 may further be e.g. a mobile terminal or a wireless terminal, a mobile phone, a computer such as e.g. a laptop, a tablet computer, sometimes referred to as a surf plate, with wireless capability, target device, iPAD, smart phone, Laptop Embedded Equipment (LEE), Laptop Mounted Equipment (LME), USB dongles etc. or any other radio network units capable to communicate over a radio link in the wireless communications network 300. Please note the term user equipment used in this document also covers other wireless devices such as Machine to machine (M2M) devices, even though they do not have any user.

In embodiments herein the base station 321 is a serving base station for the wireless communications device 360, while the second base station 331 and the third base station are neighbor base stations for the wireless communications device 360. Correspondingly the cell 320 is a serving cell and the second cell 330 and the third cell 340 are neighbor cells for the wireless communications device 360. In the context of Figure 3 a neighbor cell is a cell that the wireless communications device 360 performs RSTD measurements on. However, in embodiments herein a neighbor cell is also used for the neighbor cells that are selected for computation of RSTD measurements. Thus, neighbor cells in the context of selecting neighbor cells for computation of RSTD measurements may be a subset of the neighbor cells in the context of Figure 3. For example, the wireless communications device 360 may have ten neighbor cells, of which only two are shown in Figure 3, in its neighbor cell list on which ten neighbor cells the wireless communications device 360 performs measurements for various purposes. For computation of RSTD measurements a subset of the ten neighbor cells may be selected, for example the second cell 330 and the third cell 340. As explained above, an RSTD measurement is a relative measurement between a neighbor cell and a reference cell. Moreover the reference cell may be the serving cell, or another cell among the neighbor cells.

Methods are disclosed herein for positioning of the wireless communications device 360.

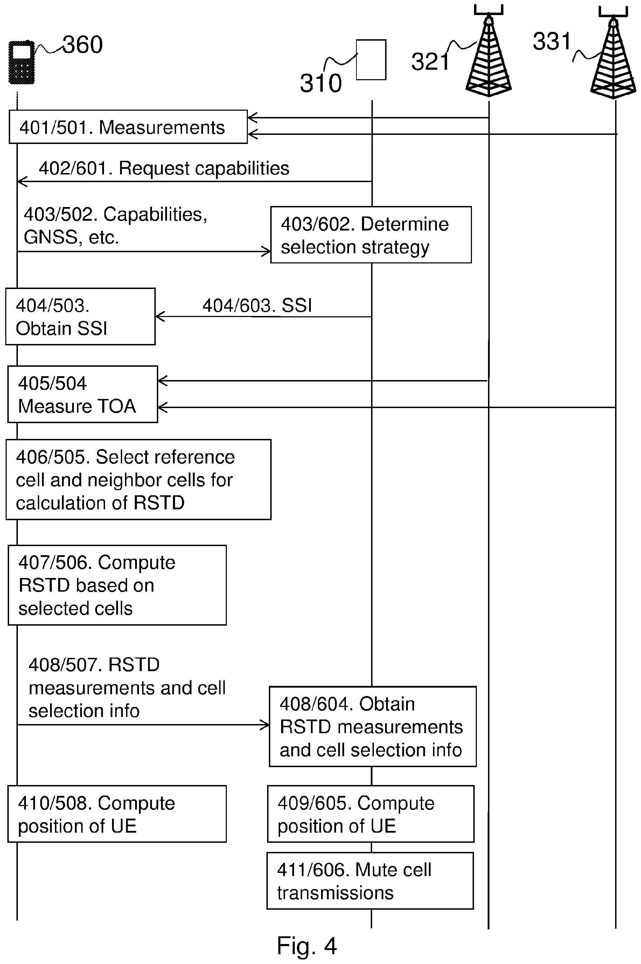

Actions for positioning of the wireless communications device 360 according to embodiments herein will now be described in relation to **Figure 4****,** **Figure 5** and **Figure 9****.**

**Figure 4** is a combined signalling diagram and flow chart that describes a method for positioning of the wireless communications device 360 according to embodiments herein. The method may be performed by the wireless communications device 360 and the network node 310 in combination.

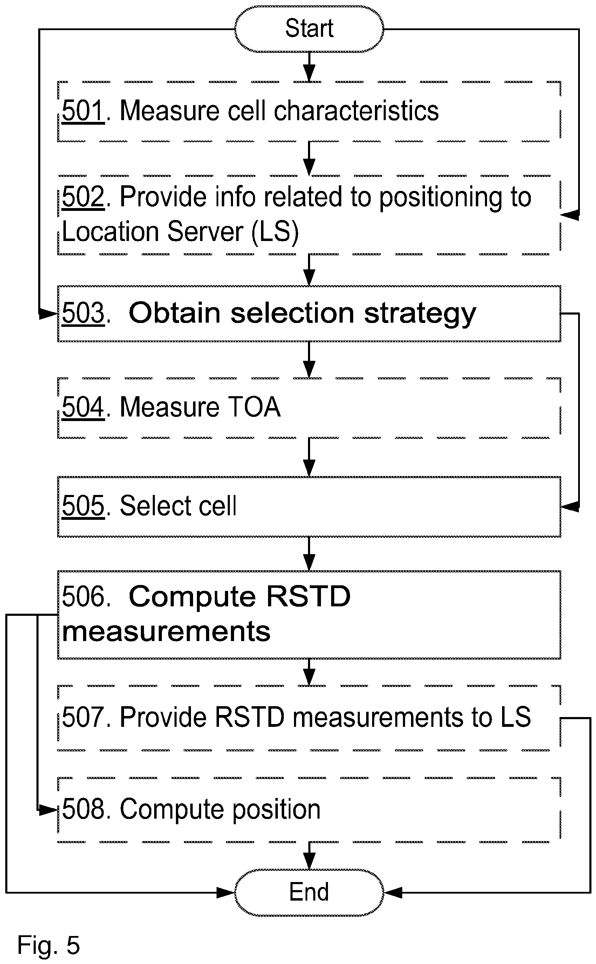

**Figure 5** is a flowchart that describes a method performed by the wireless communications device 360 for positioning of the wireless communications device 360 according to embodiments herein.

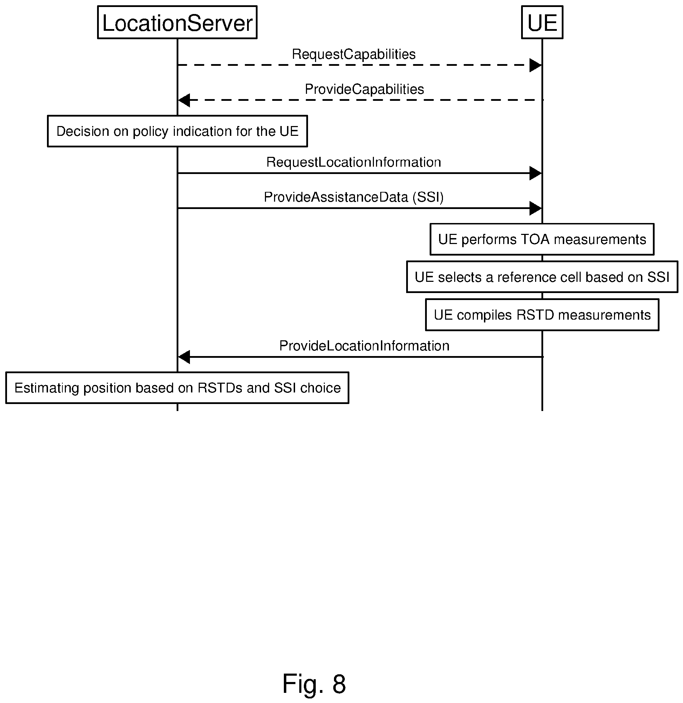

In some embodiments the positioning is initiated by the network node 310. This is also illustrated in **Figure 8****.**

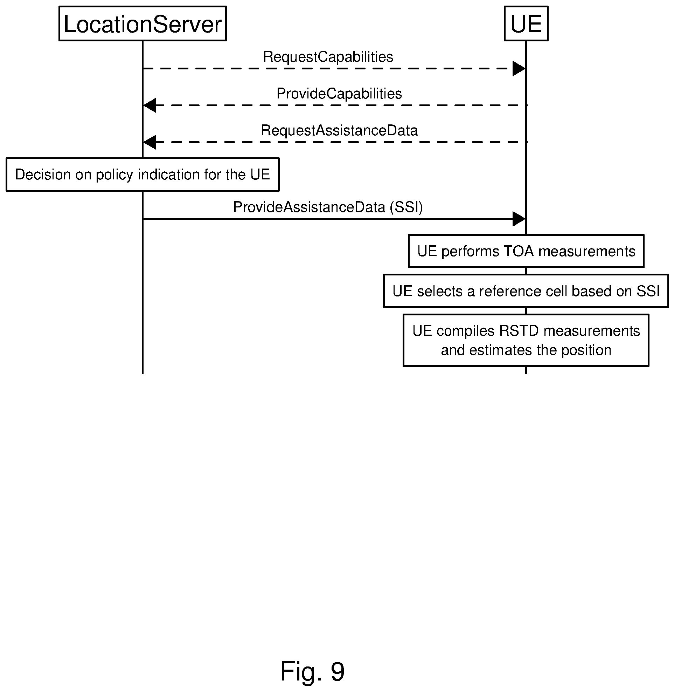

In some other embodiments the positioning is initiated by the wireless communications device 360. This is also illustrated in **Figure 9****.** In this case the wireless communications device 360 may not provide the RSTD measurements to the network node 310, but may compute the position itself based on the RSTD measurements.

It should be noted that the following embodiments are not mutually exclusive. Components from one embodiment may be tacitly assumed to be present in another embodiment and it will be obvious to a person skilled in the art how those components may be used in the other exemplary embodiments.

An embodiment of a method performed by the wireless communications device 360 for positioning of the wireless communications device 360 in a wireless communications network comprising a serving cell 320, 330, 340 and neighbour cells 320, 330, 340 will now be disclosed.
**404/503:** The wireless communications device 360 obtains information related to a cell selection process for selecting a cell 320, 330, 340 to be used for computing a position of the wireless communications device 360.
**401/405/501/504:** The wireless communications device 360 measures a measure of a signal associated with the cell 320, 330, 340 to be selected;
**406/505:** The wireless communications device 360 selects the cell 320, 330, 340 to be used for computing the position of the wireless communications device 360 based on the information related to the cell selection process.
**407/506:** The wireless communications device 360 computes a difference of the measures based on the selected cell 320, 330, 340.

Further details of the above disclosed steps performed by the wireless communications device 360 as well as other embodiments related thereto will now be disclosed in detail. According to embodiments the wireless communications device 360 may:
- **measure 401/501** characteristics of the cells in its cell list, such as the cell 320, the second cell 330 and the third cell 340. Such characteristics may comprise characteristics of TOA measurements. The characteristics may later be taken into account in action 403/602 below by the network node 310 when it determines which information related to selection of cells that it is to send to the wireless communications device 360. This action may be performed by means such as **a measuring module 1010** in the wireless communications device 360. The **measuring module 1010** may be implemented by **a processor 1080** in the wireless communications device 360.
- **provide 403/502** information to the network node 310, which information is useful for determining the SSI that the network node 310 may provide the wireless communications device 360 with below. Examples of information that the wireless communications device 360 may provide the network node 310 with are TOA measurements, GNSS measurements and UE capabilities. This action may be performed by means such as **a providing module 1020** in the wireless communications device 360. The providing module 1020 may be implemented by the processor 1080 in the wireless communications device 360. The action 403/502 can comprise providing the network node(310 with information related to the cell selection. The information related to the cell selection can comprise an indication of the selected cell 320, 330, 340, or an indication of a selection strategy used to select the cell 320, 330, 340. The selection strategy can indicate to the wireless communications device 360 to select neighbor cells 320, 330, 340 based on its current serving cell 320, 330, 340.
- **obtain 404/503** the SSI. The SSI may indicate to the wireless communications device 360 the mechanism to select the reference cell, e.g. based on the observed conditions at the wireless communications device 360 at the time of RSTD computations. The SSI may refer to any one or more out of the selection of the reference cell and the selection of one or more neighbor cells. It may be mandatory for the wireless communications device 360 to follow the cell selection mechanisms described by the SSI, or it may be up to the wireless communications device 360 to apply the mechanism or reject it. If the wireless communications device 360 rejects a proposed mechanism the wireless communications device 360 may select the reference cell and neighbor cells according to its own preference. An example of SSI was given in the introduction to the detailed description. A second example comprises an indication that the wireless communications device 360 shall select the reference cell based on which cell that corresponds to maximum PRS Signal-to-Noise-Ratio (SNR). Further examples and details of the SSI will be given below.
   In a first scenario the wireless communications device 360 obtains the SSI from the network node 310. In the first scenario some embodiments herein enable a systematic approach for the network node 310 to assist the wireless communications device 360 in the selection of the reference cell and the neighbor cells. In one embodiment, the SSI is provided to the wireless communications device 360 as an assisted data, e.g in a ProvideAssistanceData message. The purpose of assistance data is to help the wireless communications device 360 in performing high quality RSTD measurements.
   In a second scenario the wireless communications device 360 obtains the SSI from itself. For example, the wireless communications device 360 may be programed with multiple cell selection strategies and for a given measurement report of a TOA measurement, the wireless communications device 360 selects one strategy beneficial for the RSTD measurement which is the difference between two TOA measurements.
   The information related to the cell selection process can comprise a blacklist of reference cells 320, 330, 340 and thus indicate to the wireless communications device 360 which cells 320, 330, 340 not to be candidates for selection as reference cell.
   The information related to the cell selection process can indicate to the wireless communications device 360 which cells 320, 330, 340 are candidates for selection as reference cell 320, 330, 340.
   The information related to the cell selection process can indicate to the wireless communications device 360 an ordered list of cells 320, 330, 340 that are candidates for selection as reference cell 320, 330, 340, wherein the list is ordered according to priority of the cells 320, 330, 340.
   This action may be performed by means such as **an obtaining module 1030** in the wireless communications device 360. The obtaining module 1030 may be implemented by a receiver in the wireless communications device 360.
- **measure 405/504** the TOA of a cell, e.g. the TOA of the cells which identification has been provided by the network node 310, e.g. in the ProvideAssistanceData message. This action may be performed by means such as the measuring module 1010 in the wireless communications device 360.
- **select 406/505** the reference cell and the neighbour cells based on the SSI. For example, the wireless communications device 360 may select the second cell 240 as reference cell based on an indication to select the cell with the lowest TOA as the reference cell. The cell 220, which is the serving cell, has a higher TOA than the second cell 230 in this example and is therefore not selected as the reference cell. The wireless communications device 360 may further select the third cell 240 as one of the neighbor cells that are to be used for computation of RSTD measurements. The selection of the third cell 240 as a neighbor cell may be based on a second SSI, i.e. the second SSI may be different from the SSI related to the selection of the reference cell. For example, the second SSI may comprise an indication that the wireless communications device 360 shall select a certain number of neighbor cells with an angle of arrival of received signals above or below a certain threshold.
   This action may be performed by means such as **a selecting module 1040** in the wireless communications device 360. The selecting module 1050 may be implemented by the processor 1080 in the wireless communications device 360.
- **compute 407/506** RSTD measurements based on the selected reference and neighbour cells. The RSTD measurements are computed from TOA measurements as the TOA measurement of a cell minus the TOA measurement of the reference cell. The computation of the RSTD measurements may also comprise computing RSTD accuracy. Since the selection above is based on the SSI, and possibly based on current cell conditions, the wireless communications device 360 is able to improve the RSTD measurements. Specifically, the accuracy of the RSTD measurements is improved. This action may be performed by means such as **a computing module 1050** in the wireless communications device 360. The computing module 1050 may be implemented by the processor 1080 in the wireless communications device 360.
- **provide 408/507** the RSTD measurements to the network node 310 in order for the network node 310 to compute the position of the wireless communications device 360. This may be the case when the network node 310 has initiated the positioning. As mentioned above the RSTD measurements may also comprise RSTD accuracy. The wireless communications device 360 may also provide the network node 310 with any one or more out of the selected reference cell, the selected neighbor cells, the actual method or strategy used for selecting the reference cell and the actual method or strategy used for selecting the reference cells.
   The RSTD accuracy and/or the selection strategy may be used by the network node 310 to determine which RSTD measurement has better quality or uncertainty than the other. The network node 310 may then trust the higher quality RSTD measurements more and give them higher weight while computing positioning estimates.
   This action may be performed by means such as the providing module 1020 in the wireless communications device 360.
- **compute 410/508** the position of the wireless communications device 360 based on the RSTD measurements. This may be the case when the wireless communications device 360 has initiated the positioning. This action may be performed by the computing module 1050 in the wireless communications device 360.

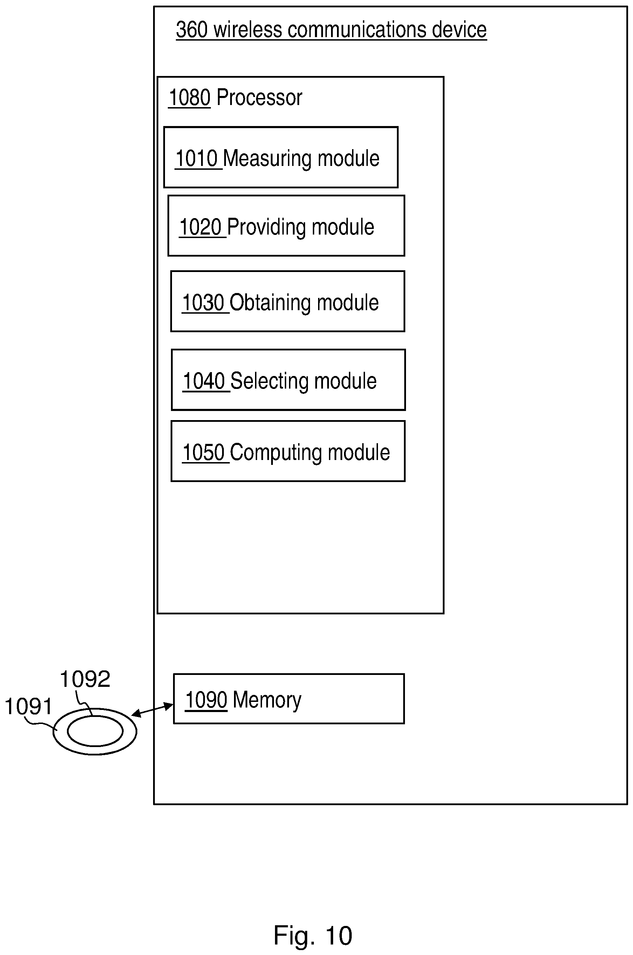

The methods may be performed in the wireless communications device 360. The wireless communications device 360 may comprise the modules mentioned above and depicted in **Figure 10** for positioning of the wireless communications device 360.

An embodiment of a method performed by the network node 310 for positioning of the wireless communications device 360 in a wireless communications network comprising a serving cell 320, 330, 340 and neighbour cells 320, 330, 340 will now be disclosed.
**403/602:** The network node 310 determines information related to a cell selection process for selecting a cell 320, 330, 340 to be used for computing a position of the wireless communications device 360.
**404/603:** The network node 310 provides the information related to the cell selection process to the wireless communications device 360.
**408/604:** The network node 310 obtains a difference of a measure of a signal associated with the cell 320, 330, 340 to be selected and a second measure of a second signal associated with a second cell 320, 330, 340.
**409/605:** The network node 310 computes the position of the wireless communications device 360 based on the difference of the measures.

Further details of the above disclosed steps performed by the network node 310 as well as other embodiments related thereto will now be disclosed in detail. According to embodiments the network node 310 may:
- **request 402/601** information from the wireless communications device 360, which information is useful for determining the SSI that the network node 310 may provide the wireless communications device 360 with below. Examples of information that the wireless communications device 360 may provide the network node 310 with are TOA measurements, GNSS measurements and UE capabilities. The RequestCapabilities message may be used for this action. An embodiment of the RequestCapabilities message will be described in more detail below. This action may be performed by means such as **a requesting module 1110** in the network node 310. The requesting module 1110 may be implemented by the processor 1180 in the network node 310.
- **determine 403/602** the SSI. The SSI may indicate to the wireless communications device 360 the mechanism to select the reference cell, e.g. based on the observed conditions at the wireless communications device 360 at the time of RSTD computations.
   This action may be performed by means such as **a determining module 1120** in the network node 310. The obtaining module 1030 may be implemented by a receiver in the network node 310.
- **provide 404/603** the SSI to the wireless communications device 360, e.g. in the ProvideAssistanceData message. This action may be performed by means such as **a providing module 1130** in the network node 310.
- **obtain 408/604** the RSTD measurements from wireless communications device 360 in order to compute the position of the wireless communications device 360. This may be the case when the network node 310 has initiated the positioning. This action may be performed by means such as **an obtaining module 1140** in the network node 310.
- **compute 409/605** the position of the wireless communications device 360 based on the RSTD measurements. This action may be performed by **a computing module 1150** in the network node 310.
- **mute 411/606** certain cell transmissions when other cells 320, 330, 340 are transmitting. This action may be performed by a **muting module 1160** in the network node 310. The obtaining module 1030 may be implemented by a transmitter in the network node 310. The information related to the cell selection process can indicate to the wireless communications device 360 to select the cell 320, 330, 340 based on a signal strength condition. This enables the wireless communications device 360 to consider the muting pattern and the physical cell identity (PCI) information of the cells as an indication of hearability of certain cells, and hence the SSI can indicate that the wireless communications device 360 shall select the reference cell based on a cell with a hearability condition better than some threshold.

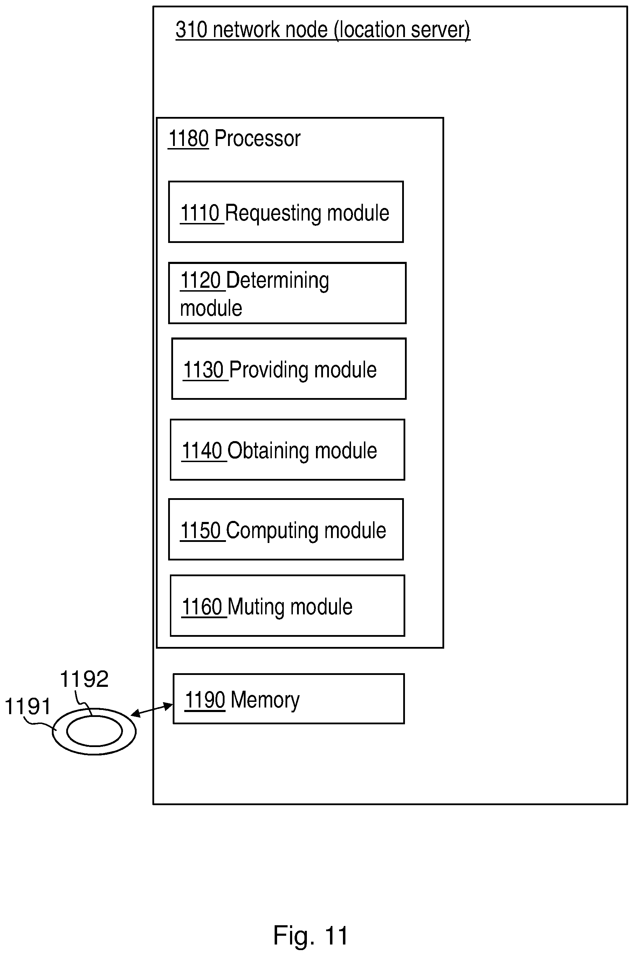

The methods may be performed in the network node 310. The network node 310 may comprise the modules mentioned above and depicted in **Figure 11** for positioning of the wireless communications device 360.

### Further details of embodiments

### Selection Strategy Information

The selection strategy information for the reference cell may comprise one or a combination of multiple of the following:
- an indication that the wireless communications device 360 shall select the reference cell based on which cell that corresponds to minimum TOA
- an indication that the wireless communications device 360 shall select the reference cell based on which cell that corresponds to maximum PRS SNR
- an indication that the wireless communications device 360 shall select the reference cell based on which cell that corresponds to minimum estimated TOA error
- an indication that the wireless communications device 360 shall select the reference cell based on which cell that corresponds to minimum delay spread
- an indication that the wireless communications device 360 shall select the reference cell based on which cell that corresponds to a Line Of Sight (LOS) criterion or condition. The LOS condition may be checked by the wireless communications device 360 through different means. For example, the wireless communications device 360 may estimate channel impulse response based on reference signal reception. If there is one channel tap in the estimated impulse response that has a significantly higher magnitude than the other channel taps, then this may indicate that the strongest channel tap corresponds to the LOS signal arrival. Moreover, other related parameters such as delay spread and path-loss estimates may indicate the LOS criterion.
- an indication that the wireless communications device 360 shall follow the previously selected reference cell, for example the one selected for a last PRS occasion
- a cell-specific selection cost parameter. In this case the network node does not provide an explicit strategy but a list of computed selection costs specific to each cell in case the wireless communications device 360 considers the selection of that particular cell as the reference cell. The section cost originates from parameters comprising network synchronization error, LOS condition, SNR.

The selection strategy information may either apply to all listed cells, or to a subset of the listed cells, e.g. all macro cells, all small cells etc. A listed cell is a cell provided by the network node 310 and on which the wireless communications device 360 is to measure TOAs.

For example, the SSI may only be relevant for certain cells. For example, it is very unlikely to receive a line of sight signal from an outdoor site to an indoor wireless communications device, and thus a line of sight criterion may not be a relevant parameter for one cell or cells that are outdoor.

The selection strategy information for the neighbor cells may comprise one or a combination of multiple of the following:
- an indication that the wireless communications device 360 shall select K number of neighbor cells with the TOA above or below certain threshold
- an indication that the wireless communications device 360 shall select the K number of neighbor cells with an angle of arrival of received signals above or below certain thresholds
- an indication that the wireless communications device 360 shall select the K number of neighbor cells with highest PRS SNR
- an indication that the wireless communications device 360 shall select the K number of neighbor cell with the least estimated TOA error
- an indication that the wireless communications device 360 shall select the K number of neighbor cells with the least delay spread
- an indication that the wireless communications device 360 shall select the K number of neighbor cells corresponding to a line of sight criterion such as a strong dominant correlation peak, path-loss indication, delay spread.
- an indication that the wireless communications device 360 shall select the same K number of neighbor cells as in previous selection, for example the neighbor cells selected for the last PRS occasion.
- a cell-specific selection cost parameter.

The selection strategy information for neighbor cells may either apply to all listed cells, or to a subset of the listed cells, e.g. all macro cells, all small cells etc.

The following example illustrates one case scenario where the selection of a cell with the minimum TOA as a reference cell is the best choice compared to other possibilities including the serving cell.

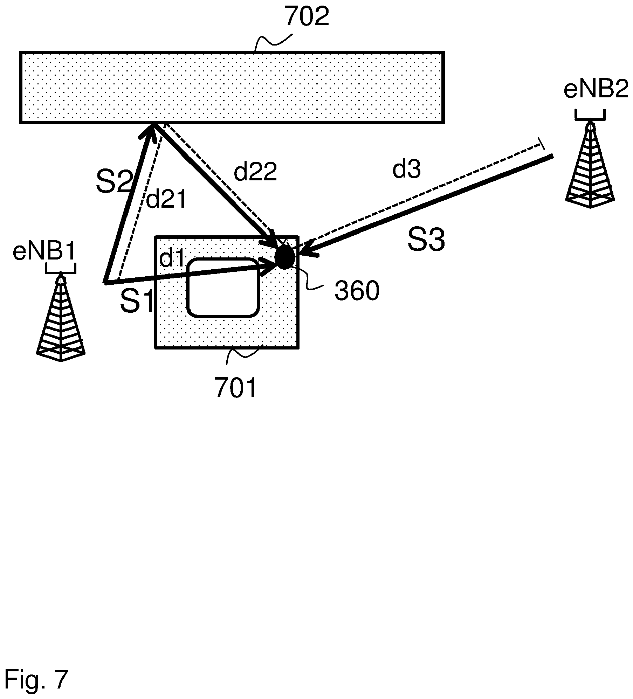

An example of a scenario where embodiments herein provide an improved positioning will now be given with the illustrative help of **Figure 7**. In Figure 7 there are two possible base stations, or nodes, for reference cell selection: eNB-1 and eNB-2. There are **two buildings 701 and 702.** The wireless communications device 360, illustrated with a black dot, is inside building 701. eNB-1 is closer to the wireless communications device 360 than eNB-2 is in terms of distance. That is distance d1 is shorter than distance d3.

The wireless communications device 360 receives two signals from e-NB1:
i) via penetration through three walls. Assuming 20 dB penetration loss, this signal will be very week. This signal is referred to as S1.
ii) ii) via reflection from another building and then penetrating through one wall. This signal is most likely stronger than the first received signal. This signal is referred to as S2.

The wireless communications device 360 receives one signal from e-NB2 by penetrating one wall. This signal is referred to as S3.

The following assumption is based on the geometry:
i) delay(S1) < delay(S3) < delay(S2). Here assumption is that S2 travels longer distance than S3 to reach wireless communications device 360. The delay of the signals in this example corresponds to the time of arrival.
ii) strength(S2) > strength(S3) > strength(S1). According to free-space path-loss, it may happen easily that path-loss incurred by S2 is less than path-loss incurred by S3, even though S2 travels longer distance. This is possible for the scenario, for example, where: di^{∗}d2 < d and d1+d2 > d.

Under the above assumptions:
i) eNB-1 is the serving cell because strength(S2) > strength(S3).
ii) eNB-1 is the closest node as well.
iii) Since S1 is very weak, around 40 dB weaker due to extra wall penetrations, it will not be detected under basic receiver models. Therefore, the cell that provides minimum TOA is eNB-2, since delay(S3) < delay(S2).
iv) The cell that provides minimum TOA is a good choice for RSTD reference cell because it is more likely that the cell that provides minimum TOA has a direct path without reflection and is closest to the wireless communications device 360.

Although e-NBi is the serving cell and it is also the cell closest to the wireless communications device 360, it does not provide minimum TOA, and hence eNB2 in this example is a better option to consider as reference cell.

### SSI determination in the location server

The network node 310 may determine the SSI in consideration of additional information from the wireless communications device 360. This section lists some embodiments. Note that the selection cost may be used in direct combination with a first characteristic, or to select a subset of cells that meet a selection cost criterion, and then the reference cell is selected from that subset in consideration of the first characteristic. One such example is to let the selection cost encode a priority, or a binary indicator to mark the subset of cells from which the reference cell will be selected. Examples include indicating only macro cells, or indicating only small cells. The subset of cells from which the reference cell will be selected may be modified depending on e.g. the history of the wireless communications device 360, the capabilities of the wireless communications device 360 and on current radio conditions in the cells.

### Using accurate GNSS measurements

Some wireless communications devices may provide both RSTD measurements and GNSS information to the network node 310. This enables the network node 310 to gather statistics about the performance of a selection strategy in a certain geographical region and associated to one or more characteristics related to the wireless communications device 360 such as capabilities. By alternating different SSIs, the network node 310 may determine the most favorable selection strategy in the geographical region and/or given certain wireless communications device capabilities and/or characteristics. Examples of the capabilities include receiver capabilities such as interference cancellation.

### Using capabilities of wireless communications devices

Capabilities of wireless communications devices such as PRS interference cancellation and support for different selection strategies may have an impact on the SSI selection. Some examples include
- SSI selection based on what is supported by the wireless communications device. For example, the network node 310 may select a minimum TOA if this is supported, otherwise maximum SNR if that is supported, etc.
- SSI selection based on whether the wireless communications device supports PRS interference cancellation, in which case the SSI may indicate minimum TOA. This means less risk of selecting a minimum TOA cell with poor SNR due to interference from a serving macro cell. The selection may also depend on whether the wireless communications device is served by a macro cell or a small cell.

### Using site location information

The selection cost may be set to favor cells with specific geographical conditions met, in particular for neighbor cell selection. For example, the positioning is more accurate if cells are surrounding the wireless communications device 360 compared to if they are all on one side of the wireless communications device 360.

Also, the type of cells may affect the selection cost. For example, small cells may be considered to be of too low transmission power to act as reference cells, and only macro cells may be considered. Also, it may be so that small cells are preferred as neighbor cells, and macro cells fill up vacant places in the list.

As indicated below, the selection cost may correspond to the expected network synchronization error, which is cell-specific in general. The network synchronization error corresponds to the timing error of an eNB in sending the PRS compared to a reference timing. A perfectly synchronized network is a network wherein all the eNBs send the PRS signals at exactly the same time compared to the reference timing.

### Using additional measurements performed by wireless communications devices

In one embodiment the network node 310 may receive, e.g. via LPPa, the mobility history report, as defined in 3GPP TS 36.331 (V12.5.0), from the wireless communications device 360 to the base station 321 over RRC. The mobility history report comprises the most recent cells which the wireless communications device 360 has visited. The mobility history report may be provided with a VisitedCellInfoList information element as shown below.

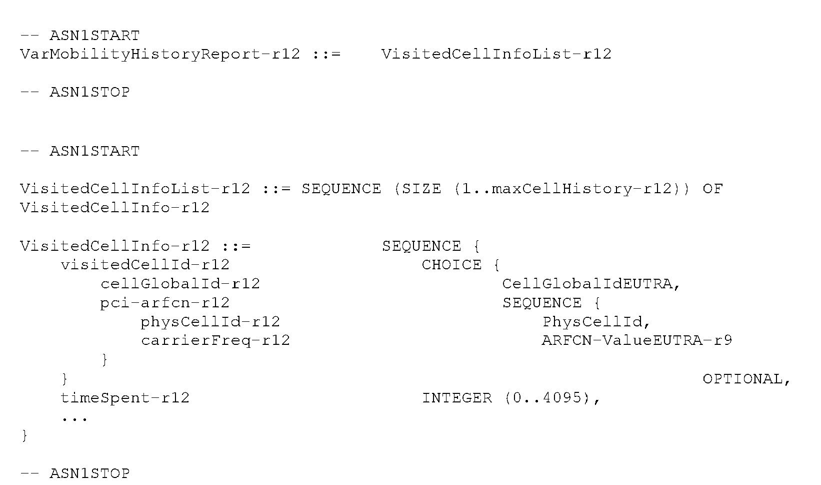

### VisitedCellInfoList information element

This report helps the network node 310 to identify the potential good candidates of cells. This is useful information especially for indoor wireless communications devices in a cluster of small cells.

In one embodiment, the K number of cells may be fixed. In another embodiment, the number K may be a variable and decided based on for example an SNR threshold which indicates the strongest cells in the vicinity of the wireless communications device 360. In the same embodiment of having a variable K, the network node 310 may receive, e.g. via LPPa, the speed of the wireless communications device 360. The speed may be indicated by a MobilityState Information, indicated in 3GPP TS 36.331 (V12.5.0) and shown below, to decide on the length of K. High speed wireless communications devices may include more cells in a monitor list, i.e. a list of cells given by the network node 310 to the wireless communications device 360, to perform TOA measurements on, while low speed wireless communications devices may only need to monitor neighbor cells close by. Indoor wireless communications devices may have low speed and thus may have a narrowed-down list of cells to monitor. This mobilityState Information indicates the mobility state, as defined in paragraph 5.2.4.3 in 3GPP TS 36.304, of the wireless communications device 360 just prior to the wireless communications device 360 goes into RRC_CONNECTED state. The values of medium and high respectively correspond to the wireless communications device 360 being in Medium-mobility and High-mobility states. Otherwise the wireless communications device 360 is in normal state.

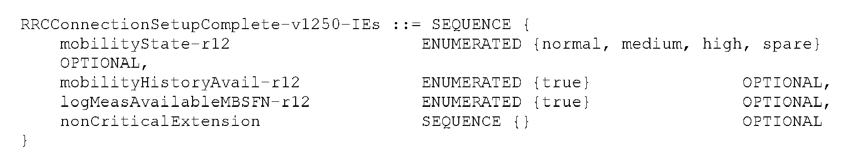

### MobilityState Information

The size of the K is very dependent on the PRS transmissions. Transmissions from different cells interfere with each other. However, the transmission of reference signals may be scheduled such that interference is kept low or to an acceptable level. This is achieved for example by muting certain cell transmissions when other cells are transmitting. Here, muting a cell transmission refers to no transmission. In the case of proper PRS muting schemes where the interference is limited, a high value for K will improve the position estimation, while in non-muting PRS scenarios, the choice of low value K is more beneficial. This is due to an increased probability of introducing bad quality cells in the OTDOA.

### Other Considerations

In another embodiment, the network node 310 requests specific TOA measurements from the wireless communications device 360 and receives TOA measurements from a set of cells. This enables the network node 310 to select SSI or determine the selection cost based on the reported TOAs. Such requests may be scheduled at a pre-determined time-interval or may be triggered by some event, for example that the wireless communications device 360 experiences an obvious positioning error. The obvious positioning error may be any obvious source of positioning error known at the network node 310, for example due to some unacceptable synchronization error at a particular eNB, or temporary obstacles which result in a TOA much higher than the expected value corresponding to the actual distance.

The network node 310 may also sort the TOAs and based on the distribution and the difference between them compute a selection cost for each cell to become a reference cell. In embodiments herein a cell with lowest selection cost is defined to be the first priority to become a reference cell. A cell with higher selection cost is less favorable to become a reference cell. In case the reference cell was not reported back by the wireless communications device 360, the network node 310 may still assume a selection cost for the serving cell, and assumes the serving cell as the reference cell and considers the RSTD measurements of the cells reported with lower TOAs.. This is due to the fact that the wireless communications device 360 may still choose the serving cell as the reference cell, and it is beneficial for the network node 310 to know the selection cost value of the serving cell in comparison to the neighbor cells.

In some embodiments, the selection cost value may be based not only on the TOA accuracy, but also on some other parameters such as the location of the cells and the SNR values of the cells.

In some embodiments the selection cost value may also be helpful in the computation of an estimated RSTD value and corresponding RSTD quality. The selection cost value may be reported by the network node 310 to the wireless communications device 360 as assisted information.

In some embodiments the selection cost value step may be partially performed at the wireless communications device side.

The benefit with a reference cell selection based on the selection cost value is that the network node 310 is in better control over the reference cell selection compared to if the network node 310 sends a list of reference cell selection without a selection cost.

### Reference cell selection based on the selection strategy

Based on the SSI, the wireless communications device 360 selects the RSTD reference cell. The wireless communications device 360 may select the reference cell based on: which cell that corresponds to minimum TOA
∘ When the wireless communications device 360 has estimated TOA for all or a subset of the cells in consideration, e.g. as listed by the network node 310, the wireless communications device 360 will select the cell with the minimum TOA as the reference cell.
- which cell that corresponds to maximum PRS SNR
   ∘ When the wireless communications device 360 has estimated PRS SNR for all or a subset of the cells in consideration, e.g. as listed by the network node 310, the wireless communications device 360 will select the cell with the maximum PRS SNR as the reference cell.
- which cell that corresponds to minimum estimated TOA error
   ∘ When the wireless communications device 360 has estimated TOA error for all or a subset of the cells in consideration, e.g. as listed by the network node 310, the wireless communications device 360 will select the cell with the minimum TOA error as the reference cell.
- which cell that corresponds to minimum delay spread
   ∘ when the wireless communications device 360 has estimated delay spread for all or a subset of the cells in consideration (e.g. as listed by the network node 310), the wireless communications device 360 will select the cell with the minimum delay spread as the reference cell
- which cell that corresponds to a line of sight criterion such as a strong dominant correlation peak, a lower path loss indication.
   ∘ When the wireless communications device 360 has estimated PRS correlation function for all or a subset of the cells in consideration, e.g. as listed by the network node 310, the wireless communications device 360 will select the cell that meets a line of sight criterion, such as a strong dominant correlation peak.
- an indication that there is no change for reference cell compared to last positioning occasion
- a cell-specific selection cost parameter
   ∘ When the wireless communications device 360 has estimated a first characteristic for all or a subset of the cells in consideration, e.g. as listed by the network node 310, the wireless communications device 360 will combine the first characteristic with the cell-specific selection cost parameter to determine a cell-specific second characteristic. Then, the wireless communications device 360 will select the cell that corresponds to the optimum, e.g. maximum or minimum, second characteristic. Some embodiments comprise
   ▪ a cell-specific selection cost parameter representing the network synchronization error, and the first characteristic being the TOA error. The determined second characteristic may correspond to the combined error. For example, if the synchronization error and the TOA error both are assumed to be uncorrelated, then the second characteristic may be the total error variance, which is determined as the sum of the synchronization error variance and the TOA error variance.
   ▪ A cell-specific selection cost parameter representing a priority, and the first characteristic may represent any of the afore-mentioned characteristics. The wireless communications device 360 then selects the cell that corresponds to the optimal first characteristic among the cells that are listed with the highest priority.

Moreover, the wireless communications device 360 may be mandated to follow the selection strategy information. However in some cases the wireless communications device 360 may override the SSI from the network node 310 provided that the wireless communications device 360 indicates the selected reference cell, possibly also indicating the considered selection strategy to the network node 310.

The wireless communications device 360 may also select K neighbor cells based on selection strategy information in a similar manner as described above. Again, the wireless communications device 360 may or may not be mandated to follow the selection strategy information.

While in the above, it is assumed that the network node 310 explicitly signals a desired SSI to the wireless communications device 360, in another embodiment the SSI is not signaled to the wireless communications device 360. The wireless communications device 360 is then programed with multiple strategies and for a given set of TOA measurements, the wireless communications device 360 selects one strategy beneficial for the given scenario.

### Signaling support

Embodiments herein are supported by information which may be provided to the wireless communications device 360 via LPP, as illustrated by two different embodiments in **Figure 8** and **Figure 9****.** As mentioned above, in Figure 8 the positioning is initiated by the network node 310 with the RequestLocationInformation message. In Figure 9 the positioning is initiated by the wireless communications device 360 with the RequestAssistanceData message.

Figure 8 illustrates how, optionally, the wireless communications device 360 may be queried from the network node 310 about its capabilities via a request, RequestCapabilities, and a response, ProvideCapabilities. Part of the response may concern OTDOA capabilities in the information element OTDOA-ProvideCapabilities, illustrated below. 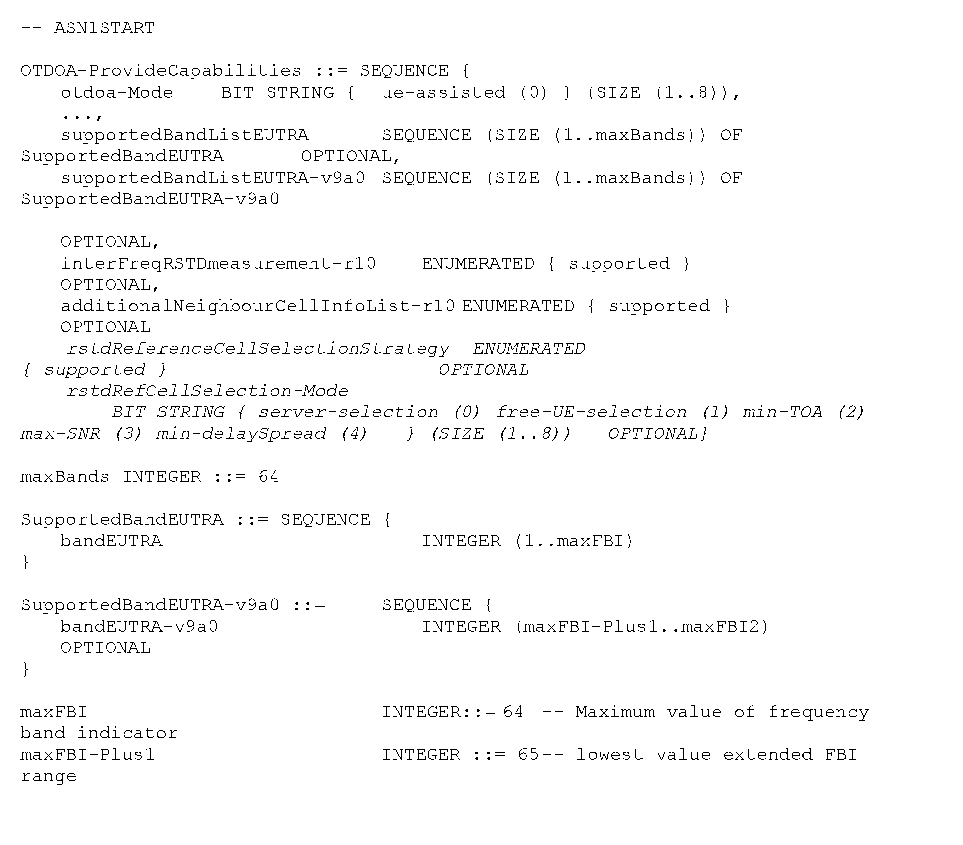 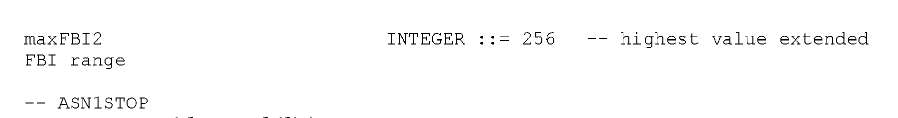 OTDOA-ProvideCapabilities.

The information element OTDOA-ProvideCapabilities may include reference cell selection capabilities of the wireless communications device 360. The reference cell selection capabilities may be indicated either as something that is supported or not. The reference cell selection capabilities may also be indicated as something that is supported with a specific indication of what strategies that are supported.

In one embodiment described by the signaling chart in Figure 8, the wireless communications device 360 is requested to provide location information, RequestLocationInformation, by the network node 310, and responds back with a response including measurements, ProvideLocationInformation. The network node 310 may also provide detailed assistance information, which may be extended with SSI, via a ProvideAssistanceData message, for example including the OTDOA-ProvideAssistanceData IE illustrated below, where amendments are marked with italic.

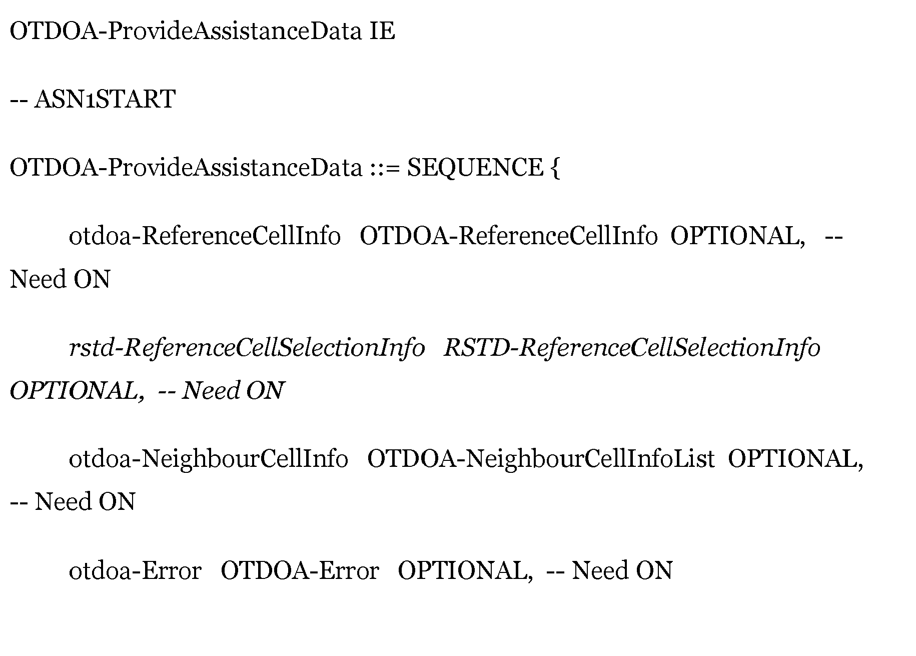

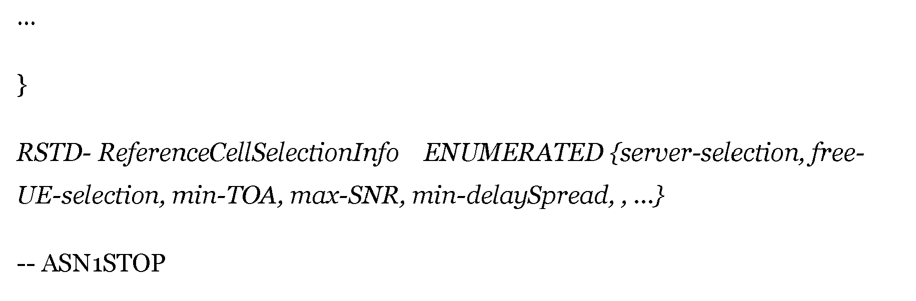

The network node 310 may also include a cell-specific SSI such as cell-specific selection cost information. This information may be comprised in an extended OTDOA-NeighbourCellInfoList IE as part of the OTDOA-ProvideAssistanceData IE, described below with amendments marked with italic. The encoding of the selection cost value may be into an integer, as in the example where there is a mapping from the integer value to the selection cost. 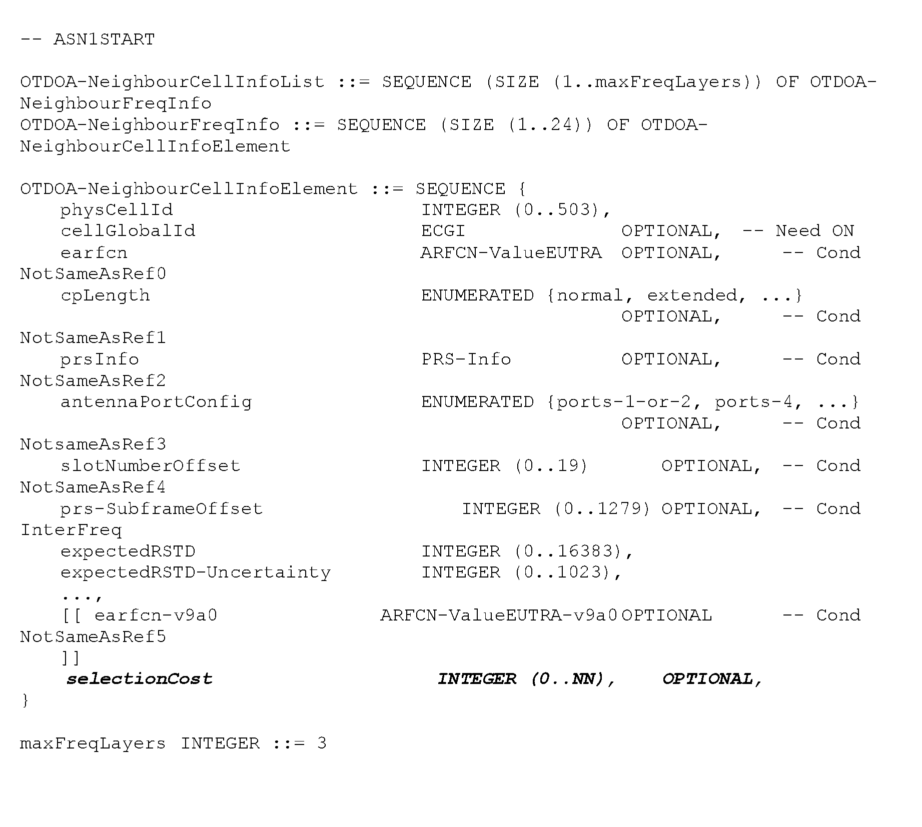 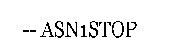 OTDOA-NeigbourCellInfo List.

In an alternative embodiment illustrated in Figure 9, the wireless communications device 360 requests assistance information from the network node 310, RequestAssistanceData, and receives assistance data back, ProvideAssistanceData, for example including the SSI. The SSI may be included in the OTDOA-ProvideAssistanceData IE as in the signaling example in Figure 9.

### Advantages

- The selection of the reference cell and/or neighbor cells are according to the SSI of the network node 310, for example based on previous experiences.
- The SSI assists the wireless communications device 360 to perform high quality RSTD measurements, e.g. by providing selection criteria that corresponds to high quality measurements.
- The SSI that led to the selected reference cell may be useful information for a better OTDOA position estimation at the network node 310.
- The selection strategy information of the neighbor cells may give proper weighting to the covariance matrix used in the OTDOA position estimation. In other words, the SSI may be utilized in assessing the quality of the RSTD measurements.

The term cell as herein used can be defined as a specific geographical region covered by transmission from a network node, such as a radio access network node. Additionally or alternatively, a cell can be defined as a region in which the wireless communications device, for a given radio access technology, is able to receive (and correctly decode) reference signals specific for that given region from a network node. Two or more such cells, in which the same or different radio access technologies are used, may be overlapping.

The embodiments herein may be implemented through one or more processors, such as the processor 1080 in the wireless communications device 360 depicted in Figure 10, and the processor 1280 in the network node 310 depicted in Figure 11 together with computer program code for performing the functions and actions of the embodiments herein. The program code mentioned above may also be provided as a computer program product, for instance in the form of a data carrier carrying computer program code for performing the embodiments herein when being loaded into the wireless communications device 360 and the network node 310. One such carrier may be in the form of a CD ROM disc. It is however feasible with other data carriers such as a memory stick. The computer program code may furthermore be provided as pure program code on a server and downloaded to the wireless communications device 360 and network node 310.

Thus, the methods according to the embodiments described herein for the wireless communications device 360 and the network node 310 may be implemented by means of a computer program product, comprising instructions, i.e., software code portions, which, when executed on at least one processor, cause the at least one processor to carry out the actions described herein, as performed by the wireless communications device 360 and the network node 310. The computer program product may be stored on a computer-readable storage medium. The computer-readable storage medium, having stored there on the computer program, may comprise the instructions which, when executed on at least one processor, cause the at least one processor to carry out the actions described herein, as performed by the wireless communications device 360 and the network node 310. In some embodiments, the computer-readable storage medium may be a non-transitory computer-readable storage medium.

The wireless communications device 360 and the network node 310 may further each comprise **a memory 1090, 1190**, comprising one or more memory units. The memory 1090, 1190 is arranged to be used to store obtained information such as information in Information Elements, information related to TOA, RSTD, cell selection, serving cell, neighbour cells, reference cell, GNSS, cost values and applications etc. to perform the methods herein when being executed in the wireless communications device 360 and the network node 310.

When using the word "comprise" or "comprising" it shall be interpreted as non- limiting, i.e. meaning "consist at least of".

Therefore, the above embodiments should not be taken as limiting the scope, which is defined by the appending claims.

Note that although terminology from 3GPP LTE/SAE has been used in this disclosure to exemplify the embodiments herein, this should not be seen as limiting the scope of the embodiments herein to only the aforementioned system. Other wireless systems may also benefit from exploiting the ideas covered within this disclosure.

Also note that terminology such as a first network node and a second network node should be considered to be non-limiting and does in particular not imply a certain hierarchical relation between the two.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method performed by a wireless communications device (360) for positioning of the wireless communications device (360) in a wireless communications network (300), wherein the wireless communications network (300) comprises a serving cell (320, 330, 340) and neighbour cells (320, 330, 340), the method comprising:
obtaining (404, 503), from a network node (310), selection strategy information, SSI, related to a cell selection process for selecting a reference cell (320, 330, 340), which reference cell is to be used for computing a position of the wireless communications device (360), the SSI indicating a mechanism for selecting the reference cell, the reference cell being one out of the serving cell and the neighbour cells;
measuring (401, 405, 501, 504) a Time Of Arrival, TOA, of a signal associated with the serving cell (320, 330, 340) and a TOA of a neighbouring cell;
selecting (406, 505) the reference cell (320, 330, 340) to be used for computing the position of the wireless communications device (360) based on the SSI, wherein the SSI indicates to the wireless communication device (360) to select as reference cell (320, 330, 340) that cell (320, 330, 340) that corresponds to a minimum TOA in combination with at least one of that it corresponds to a minimum estimated TOA error, a minimum delay spread, a previously selected reference cell and a line of sight condition;
computing (407, 506) a difference of the measured TOAs from the TOA of the reference cell based on the selection of the reference cell (320, 330, 340), wherein the difference of the measured TOAs is a Reference signal Time difference, RSTD; and
providing (408, 507) the computed difference of the TOAs to the network node (310) for the network node (310) to compute the position of the wireless communications device (360) based on the computed difference of the TOAs.

2. The method according to claim 1, wherein the SSI indicates to the wireless communications device to select neighbour cells (320, 330, 340) to be measured for positioning purposes from a larger set of neighbour cells with the TOA above or below certain threshold.

3. The method according to claim 1, wherein the SSI is provided by a network (300) node (310) configured to assist the wireless communication device with positioning measurements.

4. The method according to claim 1, further comprising:
providing (403, 502) the network (300) node (310) with information related to the reference cell (320, 330, 340) selection.

5. The method according to claim 1, wherein the SSI information further indicates to the wireless communications device (360) which cells (320, 330, 340) not to be candidates for selection as reference cell.

6. The method according to claim 1, wherein the SSI information further indicates to the wireless communications device (360) which cells (320, 330, 340) are candidates for selection as reference cell (320, 330, 340).

7. The method according to claim 1, wherein the SSI information further indicates the mechanism for selecting the reference cell to the wireless communications device (360), among an ordered list of cells (320, 330, 340) that are candidates for selection as reference cell (320, 330, 340), wherein the list is ordered according to priority of the cells (320, 330, 340).

8. A method performed by a network (300) node (310) for positioning of a wireless communications device (360) in a wireless communications network (300), wherein the wireless communications network (300) comprises a serving cell (320, 330, 340) and neighbour cells (320, 330, 340), the method comprising:
determining (403, 602) selection strategy information, SSI, related to a cell selection process for selecting a reference cell (320, 330, 340), which reference cell is to be used for computing a position of the wireless communications device (360), the SSI indicating a mechanism for selecting the reference cell, the reference cell being one out of the serving cell and the neighbour cells ;
providing (404, 603) the SSI to the wireless communications device (360), for the wireless communications device to select (406, 505) the reference cell (320, 330, 340) based on the SSI, wherein the SSI indicates to the wireless communication device (360) to select as reference cell (320, 330, 340) that cell (320, 330, 340) that corresponds to a minimum Time Of Arrival, TOA in combination with at least one of that it corresponds to a minimum estimated TOA error, a minimum delay spread, a previously selected reference cell and a line of sight condition;
obtaining (408, 604) a difference of a Time Of Arrival, TOA, of a signal associated with the reference cell (320, 330, 340) to be selected and a second TOA of a second signal associated with a second cell (320, 330, 340), wherein the difference of the measured TOAs is a Reference signal Time difference, RSTD; and
computing (409, 605) the position of the wireless communications device (360) based on the difference of the TOAs from the TOA of the reference cell.

9. The method according to claim 8, further comprising:
muting (411, 606) certain cell transmissions when other cells (320, 330, 340) are transmitting.

10. A wireless communications device (360) for positioning of the wireless communications device (360) in a wireless communications network (300), wherein the wireless communications network (300) comprises a serving cell (320, 330, 340) and neighbour cells (320, 330, 340), the wireless communications device (360) comprising a processor, the processor being configured to cause the wireless communications device (360) to:
obtain, from a network node (310), selection strategy information, SSI, related to a cell selection process for selecting a reference cell (320, 330, 340), which reference cell is to be used for computing a position of the wireless communications device (360), the SSI indicating a mechanism for selecting the reference cell, the reference cell being one out of the serving cell and the neighbour cells;
measure a Time Of Arrival, TOA, of a signal associated with the serving cell (320, 330, 340) and a TOA of a neighbouring cell;
select the reference cell (320, 330, 340) to be used for computing the position of the wireless communications device (360) based on the SSI, wherein the SSI indicates to the wireless communication device (360) to select as reference cell (320, 330, 340) that cell (320, 330, 340) that corresponds to a minimum TOA in combination with at least one of that it corresponds to a minimum estimated TOA error, a minimum delay spread, a previously selected reference cell and a line of sight condition; and
compute a difference of the measured TOAs from the TOA of the reference cell based on the selection of the reference cell (320, 330, 340), wherein the difference of the measured TOAs is a Reference signal Time difference, RSTD; and
provide the computed difference of the TOAs to the network node (310) for the network node (310) to compute the position of the wireless communications device (360) based on the computed difference of the TOAs.

11. A network (300) node (310) for positioning of a wireless communications device (360) in a wireless communications network (300), wherein the wireless communications network (300) comprises a serving cell (320, 330, 340) and neighbour cells (320, 330, 340), the network (300) node (310) comprising a processor, the processor being configured to cause the network (300) node (310) to:
determine selection strategy information, SSI, related to a cell selection process for selecting a reference cell (320, 330, 340), which reference cell is to be used for computing a position of the wireless communications device (360), the SSI indicating a mechanism for selecting the reference cell, the reference cell being one out of the serving cell and the neighbour cells;
provide the SSI to the wireless communications device (360), for the wireless communications device to select (406, 505) the reference cell (320, 330, 340) based on the SSI, wherein the SSI indicates to the wireless communication device (360) to select as reference cell (320, 330, 340) that cell (320, 330, 340) that corresponds to a minimum TOA in combination with at least one of that it corresponds to a minimum estimated TOA error, a minimum delay spread, a previously selected reference cell and a line of sight condition;
obtain a difference of a Time Of Arrival, TOA, of a signal associated with the reference cell (320, 330, 340) to be selected and a second TOA of a second signal associated with a second cell (320, 330, 340), wherein the difference of the measured TOAs is a Reference signal Time difference, RSTD; and
compute the position of the wireless communications device (360) based on the difference of the TOAs from the TOA of the reference cell.

12. A computer program product for positioning of a wireless communications device (360) in a wireless communications network (300), wherein the wireless communications network (300) comprises a serving cell (320, 330, 340) and neighbour cells (320, 330, 340), the computer program comprising instructions which, when run on a processor of the wireless communications device (360), causes wireless communications device (360) to:
obtain, from a network node (310), selection strategy information, SSI, related to a cell selection process for selecting a reference cell (320, 330, 340), which reference cell is to be used for computing a position of the wireless communications device (360), the SSI indicating a mechanism for selecting the reference cell, the reference cell being one out of the serving cell and the neighbour cells;
measure a Time Of Arrival, TOA, of a signal associated with the serving cell (320, 330, 340) and a TOA of a neighbouring cell;
select the reference cell (320, 330, 340) to be used for computing the position of the wireless communications device (360) based on the SSI, wherein the SSI indicates to the wireless communication device (360) to select as reference cell (320, 330, 340) that cell (320, 330, 340) that corresponds to a minimum TOA in combination with at least one of that it corresponds to a minimum estimated TOA error, a minimum delay spread, a previously selected reference cell and a line of sight condition; and
compute a difference of the measured TOAs from the TOA of the reference cell based on the selection of the reference cell (320, 330, 340), wherein the difference of the measured TOAs is a Reference signal Time difference, RSTD; and
provide the computed difference of the TOAs to the network node (310) for the network node (310) to compute the position of the wireless communications device (360) based on the computed difference of the TOAs.

## Patentansprüche

1. Verfahren, das von einer drahtlosen Kommunikationsvorrichtung (360) zum Positionieren der drahtlosen Kommunikationsvorrichtung (360) in einem drahtlosen Kommunikationsnetzwerk (300) ausgeführt wird, wobei das drahtlose Kommunikationsnetzwerk (300) eine bedienende Zelle (320, 330, 340) und Nachbarzellen (320, 330, 340) umfasst, das Verfahren umfassend:
Erlangen (404, 503), von einem Netzwerkknoten (310), von Auswahlstrategieinformationen (selection strategy Information, SSI) in Bezug auf einen Zellenauswahlprozess zum Auswählen einer Referenzzelle (320, 330, 340), wobei die Referenzzelle zum Berechnen einer Position der drahtlosen Kommunikationsvorrichtung (360) verwendet werden soll, wobei die SSI einen Mechanismus zum Auswählen der Referenzzelle angeben, wobei die Referenzzelle eine von der bedienenden Zelle und den Nachbarzellen ist;
Messen (401, 405, 501, 504) einer Ankunftszeit (Time Of Arrival, TOA) eines Signals, das mit der bedienenden Zelle (320, 330, 340) und einer TOA einer Nachbarzelle assoziiert ist;
Auswählen (406, 505) der Referenzzelle (320, 330, 340), die zum Berechnen der Position der drahtlosen Kommunikationsvorrichtung (360) basierend auf den SSI verwendet werden soll, wobei die SSI der drahtlosen Kommunikationsvorrichtung (360) angeben, als Referenzzelle (320, 330, 340) jene Zelle (320, 330, 340) auszuwählen, die einer minimalen TOA in Kombination mit mindestens einer davon, die einem minimalen geschätzten TOA-Fehler, einer minimalen Verzögerungsaufspreizung, einer zuvor ausgewählten Referenzzelle und einer Sichtlinienbedingung entspricht;
Berechnen (407, 506) einer Differenz der gemessenen TOAs von der TOA der Referenzzelle basierend auf der Auswahl der Referenzzelle (320, 330, 340), wobei die Differenz der gemessenen TOAs eine Referenzsignalzeitdifferenz (Reference signal Time difference, RSTD) ist; und
Bereitstellen (408, 507) der berechneten Differenz der TOAs an den Netzwerkknoten (310), damit der Netzwerkknoten (310) die Position der drahtlosen Kommunikationsvorrichtung (360) basierend auf der berechneten Differenz der TOAs berechnen kann.

2. Verfahren nach Anspruch 1, wobei die SSI der drahtlosen Kommunikationsvorrichtung angeben, Nachbarzellen (320, 330, 340), die zu Positionierungszwecken gemessen werden sollen, aus einem größeren Satz von Nachbarzellen mit der TOA über oder unter einem bestimmten Schwellenwert auszuwählen.

3. Verfahren nach Anspruch 1, wobei die SSI von einem Knoten (310) eines Netzwerks (300) bereitgestellt werden, der konfiguriert ist, um die drahtlose Kommunikationsvorrichtung mit Positionierungsmessungen zu unterstützen.

4. Verfahren nach Anspruch 1, ferner umfassend:
Bereitstellen von Informationen über die Auswahl der Referenzzelle (320, 330, 340) an den Knoten (310) eines Netzwerks (300).

5. Verfahren nach Anspruch 1, wobei die SSI-Informationen der drahtlosen Kommunikationsvorrichtung (360) ferner angeben, welche Zellen (320, 330, 340) keine Kandidaten zur Auswahl als Referenzzelle sind.

6. Verfahren nach Anspruch 1, wobei die SSI-Informationen der drahtlosen Kommunikationsvorrichtung (360) ferner angeben, welche Zellen (320, 330, 340) Kandidaten zur Auswahl als Referenzzelle (320, 330, 340) sind.

7. Verfahren nach Anspruch 1, wobei die SSI-Informationen der drahtlosen Kommunikationsvorrichtung (360) ferner den Mechanismus zum Auswählen der Referenzzelle aus einer geordneten Liste von Zellen (320, 330, 340) angeben, die Kandidaten zur Auswahl als Referenzzelle (320, 330, 340) sind, wobei die Liste gemäß der Priorität der Zellen (320, 330, 340) geordnet ist.

8. Verfahren, das von einem Knoten (310) eines Netzwerks (300) zum Positionieren einer drahtlosen Kommunikationsvorrichtung (360) in einem drahtlosen Kommunikationsnetzwerk (300) ausgeführt wird, wobei das drahtlose Kommunikationsnetzwerk (300) eine bedienende Zelle (320, 330, 340) und Nachbarzellen (320, 330, 340) umfasst, das Verfahren umfassend:
Bestimmen (403, 602) von Auswahlstrategieinformationen (selection strategy Information, SSI) in Bezug auf einen Zellenauswahlprozess zum Auswählen einer Referenzzelle (320, 330, 340), wobei die Referenzzelle zum Berechnen einer Position der drahtlosen Kommunikationsvorrichtung (360) verwendet werden soll, wobei die SSI einen Mechanismus zum Auswählen der Referenzzelle angeben, wobei die Referenzzelle eine von der bedienenden Zelle und den Nachbarzellen ist;
Bereitstellen (404, 603) der SSI an die drahtlose Kommunikationsvorrichtung (360), damit die drahtlose Kommunikationsvorrichtung die Referenzzelle (320, 330, 340) basierend auf den SSI auswählt (406, 505), wobei die SSI der drahtlosen Kommunikationsvorrichtung (360) angeben, als Referenzzelle (320, 330, 340) jene Zelle (320, 330, 340) auszuwählen, die einer minimalen Ankunftszeit (Time Of Arrival, TOA) in Kombination mit mindestens einer davon, die einem minimalen geschätzten TOA-Fehler, einer minimalen Verzögerungsaufspreizung, einer zuvor ausgewählten Referenzzelle und einer Sichtlinienbedingung entspricht;
Erlangen (408, 604) einer Differenz einer Ankunftszeit (Time Of Arrival, TOA) eines Signals, das mit der Referenzzelle (320, 330, 340) assoziiert ist, die ausgewählt werden soll, und einer zweiten TOA eines zweiten Signals, das mit einer zweiten Zelle (320, 330, 340) assoziiert ist, wobei die Differenz der gemessenen TOAs eine Referenzsignalzeitdifferenz (Reference signal Time difference, RSTD) ist; und
Berechnen (409, 605) der Position der drahtlosen Kommunikationsvorrichtung (360) basierend auf der Differenz der TOAs von der TOA der Referenzzelle.

9. Verfahren nach Anspruch 8, ferner umfassend:
Stummschalten (411, 606) bestimmter Zellübertragungen, wenn andere Zellen (320, 330, 340) übertragen.

10. Drahtlose Kommunikationsvorrichtung (360) zum Positionieren der drahtlosen Kommunikationsvorrichtung (360) in einem drahtlosen Kommunikationsnetzwerk (300), wobei das drahtlose Kommunikationsnetzwerk (300) eine bedienende Zelle (320, 330, 340) und Nachbarzellen (320, 330, 340) umfasst, die drahtlose Kommunikationsvorrichtung (360) umfassend einen Prozessor, wobei der Prozessor konfiguriert ist, um die drahtlose Kommunikationsvorrichtung (360) zu Folgendem zu veranlassen:
Erlangen, von einem Netzwerkknoten (310), von Auswahlstrategieinformationen (selection strategy Information, SSI) in Bezug auf einen Zellenauswahlprozess zum Auswählen einer Referenzzelle (320, 330, 340), wobei die Referenzzelle zum Berechnen einer Position der drahtlosen Kommunikationsvorrichtung (360) verwendet werden soll, wobei die SSI einen Mechanismus zum Auswählen der Referenzzelle angeben, wobei die Referenzzelle eine von der bedienenden Zelle und den Nachbarzellen ist;
Messen einer Ankunftszeit (Time Of Arrival, TOA) eines Signals, das mit der bedienenden Zelle (320, 330, 340) und einer TOA einer Nachbarzelle assoziiert ist;
Auswählen der Referenzzelle (320, 330, 340), die zum Berechnen der Position der drahtlosen Kommunikationsvorrichtung (360) basierend auf den SSI verwendet werden soll, wobei die SSI der drahtlosen Kommunikationsvorrichtung (360) angeben, als Referenzzelle (320, 330, 340) jene Zelle (320, 330, 340) auszuwählen, die einer minimalen TOA in Kombination mit mindestens einer davon, die einem minimalen geschätzten TOA-Fehler, einer minimalen Verzögerungsaufspreizung, einer zuvor ausgewählten Referenzzelle und einer Sichtlinienbedingung entspricht; und
Berechnen einer Differenz der gemessenen TOAs von der TOA der Referenzzelle basierend auf der Auswahl der Referenzzelle (320, 330, 340), wobei die Differenz der gemessenen TOAs eine Referenzsignalzeitdifferenz (Reference signal Time difference, RSTD) ist; und
Bereitstellen der berechneten Differenz der TOAs an den Netzwerkknoten (310), damit der Netzwerkknoten (310) die Position der drahtlosen Kommunikationsvorrichtung (360) basierend auf der berechneten Differenz der TOAs berechnen kann.

11. Ein Knoten (310) eines Netzwerks (300) zum Positionieren einer drahtlosen Kommunikationsvorrichtung (360) in einem drahtlosen Kommunikationsnetzwerk (300), wobei das drahtlose Kommunikationsnetzwerk (300) eine bedienende Zelle (320, 330, 340) und Nachbarzellen (320, 330, 340) umfasst, der Knoten (310) eines Netzwerks (300) umfassend einen Prozessor, wobei der Prozessor konfiguriert ist, um den Knoten (310) eines Netzwerks (300) zu Folgendem zu veranlassen:
Bestimmen von Auswahlstrategieinformationen (selection strategy information, SSI) in Bezug auf einen Zellenauswahlprozess zum Auswählen einer Referenzzelle (320, 330, 340), wobei die Referenzzelle zum Berechnen einer Position der drahtlosen Kommunikationsvorrichtung (360) verwendet werden soll, wobei die SSI einen Mechanismus zum Auswählen der Referenzzelle angeben, wobei die Referenzzelle eine von der bedienenden Zelle und den Nachbarzellen ist;
Bereitstellen der SSI an die drahtlose Kommunikationsvorrichtung (360), damit die drahtlose Kommunikationsvorrichtung die Referenzzelle (320, 330, 340) basierend auf den SSI auswählt (406, 505), wobei die SSI der drahtlosen Kommunikationsvorrichtung (360) angeben, als Referenzzelle (320, 330, 340) jene Zelle (320, 330, 340) auszuwählen, die einer minimalen TOA in Kombination mit mindestens einer davon, die einem minimalen geschätzten TOA-Fehler, einer minimalen Verzögerungsaufspreizung, einer zuvor ausgewählten Referenzzelle und einer Sichtlinienbedingung entspricht;
Erlangen einer Differenz einer Ankunftszeit (Time Of Arrival, TOA) eines Signals, das mit der Referenzzelle (320, 330, 340) assoziiert ist, die ausgewählt werden soll, und einer zweiten TOA eines zweiten Signals, das mit einer zweiten Zelle (320, 330, 340) assoziiert ist, wobei die Differenz der gemessenen TOAs eine Referenzsignalzeitdifferenz (Reference signal Time difference, RSTD) ist; und
Berechnen der Position der drahtlosen Kommunikationsvorrichtung (360) basierend auf der Differenz der TOAs von der TOA der Referenzzelle.

12. Computerprogrammprodukt zum Positionieren einer drahtlosen Kommunikationsvorrichtung (360) in einem drahtlosen Kommunikationsnetzwerk (300), wobei das drahtlose Kommunikationsnetzwerk (300) eine bedienende Zelle (320, 330, 340) und Nachbarzellen (320, 330, 340) umfasst, das Computerprogramm umfassend Anweisungen, die, wenn sie auf einem Prozessor der drahtlosen Kommunikationsvorrichtung (360) ausgeführt werden, die drahtlose Kommunikationsvorrichtung (360) zu Folgendem veranlassen:
Erlangen, von einem Netzwerkknoten (310), von Auswahlstrategieinformationen (selection strategy Information, SSI) in Bezug auf einen Zellenauswahlprozess zum Auswählen einer Referenzzelle (320, 330, 340), wobei die Referenzzelle zum Berechnen einer Position der drahtlosen Kommunikationsvorrichtung (360) verwendet werden soll, wobei die SSI einen Mechanismus zum Auswählen der Referenzzelle angeben, wobei die Referenzzelle eine von der bedienenden Zelle und den Nachbarzellen ist;
Messen einer Ankunftszeit (Time Of Arrival, TOA) eines Signals, das mit der bedienenden Zelle (320, 330, 340) und einer TOA einer Nachbarzelle assoziiert ist;
Auswählen der Referenzzelle (320, 330, 340), die zum Berechnen der Position der drahtlosen Kommunikationsvorrichtung (360) basierend auf den SSI verwendet werden soll, wobei die SSI der drahtlosen Kommunikationsvorrichtung (360) angeben, als Referenzzelle (320, 330, 340) jene Zelle (320, 330, 340) auszuwählen, die einer minimalen TOA in Kombination mit mindestens einer davon, die einem minimalen geschätzten TOA-Fehler, einer minimalen Verzögerungsaufspreizung, einer zuvor ausgewählten Referenzzelle und einer Sichtlinienbedingung entspricht; und
Berechnen einer Differenz der gemessenen TOAs von der TOA der Referenzzelle basierend auf der Auswahl der Referenzzelle (320, 330, 340), wobei die Differenz der gemessenen TOAs eine Referenzsignalzeitdifferenz (Reference signal Time difference, RSTD) ist; und
Bereitstellen der berechneten Differenz der TOAs an den Netzwerkknoten (310), damit der Netzwerkknoten (310) die Position der drahtlosen Kommunikationsvorrichtung (360) basierend auf der berechneten Differenz der TOAs berechnen kann.

## Revendications

1. Procédé effectué par un dispositif de communication sans fil (360) pour le positionnement du dispositif de communication sans fil (360) dans un réseau de communication sans fil (300), dans lequel le réseau de communication sans fil (300) comprend une cellule de desserte (320, 330, 340) et des cellules voisines (320, 330, 340), le procédé comprenant :
l'obtention (404, 503), à partir d'un nœud de réseau (310), d'une information de stratégie de sélection, SSI, liées à un processus de sélection de cellule pour sélectionner une cellule de référence (320, 330, 340), laquelle cellule de référence doit être utilisée pour calculer une position du dispositif de communication sans fil (360), la SSI indiquant un mécanisme de sélection de la cellule de référence, la cellule de référence étant l'une de la cellule de desserte et la voisine cellules ;
la mesure (401, 405, 501, 504) d'un temps d'arrivée, TOA, d'un signal associé à la cellule de desserte (320, 330, 340) et un TOA d'une cellule voisine ;
la sélection (406, 505) de la cellule de référence (320, 330, 340) à utiliser pour calculer la position du dispositif de communication sans fil (360) sur la base de la SSI, la SSI indiquant au dispositif de communication sans fil (360) de sélectionner comme cellule de référence (320, 330, 340) cette cellule (320, 330, 340) qui correspond à un TOA minimum en combinaison avec au moins une parmi une correspondance à une erreur de TOA minimal estimée, un écart de retard minimal, une cellule de référence précédemment sélectionnée et une condition de ligne de visée ;
la calcul (407, 506) d'une différence entre les TOA mesurés et les TOA de la cellule de référence sur la base de la sélection de la cellule de référence (320, 330, 340), dans lequel la différence des TOA mesurés est une différence de temps de signal de référence, RSTD ; et
la fourniture (408, 507) de la différence calculée des TOA au nœud de réseau (310) pour que le nœud de réseau (310) calcule la position du dispositif de communication sans fil (360) sur la base de la différence calculée des TOA.

2. Procédé selon la revendication 1, dans lequel la SSI indique au dispositif de communication sans fil de sélectionner des cellules voisines (320, 330, 340) à mesurer à des fins de positionnement à partir d'un plus grand ensemble de cellules voisines avec le TOA au-dessus ou au-dessous d'un certain seuil.

3. Procédé selon la revendication 1, dans lequel la SSI est fourni par un nœud de réseau (300) (310) configuré pour assister le dispositif de communication sans fil avec des mesures de positionnement.

4. Procédé selon la revendication 1, comprenant en outre : la fourniture (403, 502) au nœud de réseau (300) (310) d'informations relatives à la sélection de la cellule de référence (320, 330, 340).

5. Procédé selon la revendication 1, dans lequel l'information SSI indique en outre au dispositif de communication sans fil (360) quelles cellules (320, 330, 340) ne doivent pas être candidates à la sélection comme cellule de référence.

6. Procédé selon la revendication 1, dans lequel l'information SSI indique en outre au dispositif de communication sans fil (360) quelles cellules (320, 330, 340) sont susceptibles d'être sélectionnées comme cellule de référence (320, 330, 340).

7. Procédé selon la revendication 1, dans lequel l'information SSI indique en outre le mécanisme de sélection de la cellule de référence pour le dispositif de communication sans fil (360), parmi une liste ordonnée de cellules (320, 330, 340) qui peuvent être sélectionnées comme cellule de référence (320, 330, 340), dans lequel la liste est ordonnée en fonction de la priorité des cellules (320, 330, 340).

8. Procédé effectué par un nœud de réseau (300) (310) pour le positionnement d'un dispositif de communication sans fil (360) dans un réseau de communication sans fil (300), dans lequel le réseau de communication sans fil (300) comprend une cellule de desserte (320, 330, 340) et des cellules voisines (320, 330, 340), le procédé comprenant :
la détermination (403, 602) d'une information de stratégie de sélection, SSI, liées à un processus de sélection de cellule pour sélectionner une cellule de référence (320, 330, 340),
laquelle cellule de référence doit être utilisée pour calculer une position du dispositif de communication sans fil (360), la SSI indiquant un mécanisme de sélection de la cellule de référence, la cellule de référence étant l'une de la cellule de service et des cellules voisines ;
la fourniture (404, 603) de la SSI au dispositif de communication sans fil (360), pour que le dispositif de communication sans fil sélectionne (406, 505) la cellule de référence (320, 330, 340) sur la base de la SSI, la SSI indiquant au dispositif de communication sans fil (360) pour sélectionner comme cellule de référence (320, 330, 340) la cellule (320, 330, 340) qui correspond à un temps d'arrivée minimal, TOA en combinaison avec au moins une parmi une correspondance à une erreur de TOA minimal estimée, un écart de retard minimal, une cellule de référence précédemment sélectionnée et une condition de ligne de visée ;
l'obtention (408, 604) d'une différence d'un temps d'arrivée, TOA, d'un signal associé à la cellule de référence (320, 330, 340) à sélectionner et d'un deuxième TOA d'un deuxième signal associé à une deuxième cellule (320, 330, 340), dans lequel la différence des TOA mesurés est une différence de temps de signal de référence, RSTD ; et
le calcul (409, 605) de la position du dispositif de communication sans fil (360) sur la base de la différence des TOA par rapport au TOA de la cellule de référence.

9. Procédé selon la revendication 8, comprenant en outre : l'inhibition (411, 606) de certaines transmissions de cellules lorsque d'autres cellules (320, 330, 340) sont en cours de transmission.

10. Dispositif de communication sans fil (360) pour le positionnement du dispositif de communication sans fil (360) dans un réseau de communication sans fil (300), dans lequel le réseau de communication sans fil (300) comprend une cellule de desserte (320, 330, 340) et des cellules voisines (320, 330, 340), le dispositif de communication sans fil (360) comprenant un processeur, le processeur étant configuré pour amener le dispositif de communication sans fil (360) à :
obtenir, à partir d'un nœud de réseau (310), une information de stratégie de sélection, SSI, liée à un processus de sélection de cellule pour sélectionner une cellule de référence (320, 330, 340), laquelle cellule de référence doit être utilisée pour calculer une position du dispositif de communication sans fil (360), la SSI indiquant un mécanisme pour sélectionner la cellule de référence, la cellule de référence étant l'une parmi la cellule de desserte et les cellules voisines ;
mesurer un temps d'arrivée, TOA, d'un signal associé à la cellule de desserte (320, 330, 340) et un TOA d'une cellule voisine ;
sélectionner la cellule de référence (320, 330, 340) à utiliser pour calculer la position du dispositif de communication sans fil (360) sur la base de la SSI, la SSI indiquant au dispositif de communication sans fil (360) de sélectionner comme cellule de référence (320, 330, 340) la cellule (320, 330, 340) qui correspond à un TOA minimum en combinaison avec au moins une parmi une correspondance à une erreur de TOA estimée minimum, un écart de retard minimum, une cellule de référence précédemment sélectionnée et une ligne de visée ; et
calculer une différence des TOA mesurés à partir du TOA de la cellule de référence sur la base de la sélection de la cellule de référence (320, 330, 340), dans laquelle la différence des TOA mesurés est une différence de temps de signal de référence, RSTD ; et
fournir la différence calculée des TOA au nœud de réseau (310) pour que le nœud de réseau (310) calcule la position du dispositif de communication sans fil (360) sur la base de la différence calculée des TOA.

11. Nœud de réseau (300) (310) pour le positionnement d'un dispositif de communication sans fil (360) dans un réseau de communication sans fil (300), dans lequel le réseau de communication sans fil (300) comprend une cellule de desserte (320, 330, 340) et des cellules voisines (320, 330, 340), le nœud de réseau (300) (310) comprenant un processeur, le processeur étant configuré pour amener le nœud de réseau (300) (310) à :
déterminer une information de stratégie de sélection, SSI, liée à un processus de sélection de cellule pour sélectionner une cellule de référence (320, 330, 340), laquelle cellule de référence doit être utilisée pour calculer une position du dispositif de communication sans fil (360), la SSI indiquant un mécanisme pour sélectionner la cellule de référence, la cellule de référence être l'une de la cellule de desserte et des cellules voisines ;
fournir la SSI au dispositif de communication sans fil (360), pour que le dispositif de communication sans fil sélectionne (406, 505) la cellule de référence (320, 330, 340) sur la base de la SSI, dans lequel la SSI indique au dispositif de communication sans fil (360) de sélectionner comme cellule de référence (320, 330, 340) la cellule (320, 330, 340) qui correspond à un TOA minimum en combinaison avec au moins une parmi une correspondance à une erreur de TOA minimum estimée, un écart de retard minimum, une cellule de référence précédemment sélectionnée et une condition de ligne de visée ;
obtenir une différence d'un temps d'arrivée, TOA, d'un signal associé à la cellule de référence (320, 330, 340) à sélectionner et d'un deuxième TOA, d'un deuxième signal associé à une deuxième cellule (320, 330, 340), dans lequel la différence des TOA mesurés est une différence de temps de signal de référence, RSTD ; et
calculer la position du dispositif de communication sans fil (360) sur la base de la différence des TOA par rapport au TOA de la cellule de référence.

12. Produit de programme informatique pour le positionnement d'un dispositif de communication sans fil (360) dans un réseau de communication sans fil (300), dans lequel le réseau de communication sans fil (300) comprend une cellule de desserte (320, 330, 340) et des cellules voisines (320, 330, 340), le programme informatique comprenant des instructions qui, lorsqu'elles sont exécutées sur un processeur du dispositif de communication sans fil (360), amènent le dispositif de communication sans fil (360) à :
obtenir, à partir d'un nœud de réseau (310), une information de stratégie de sélection, SSI, liée à un processus de sélection de cellule pour sélectionner une cellule de référence (320, 330, 340), laquelle cellule de référence doit être utilisée pour calculer une position du dispositif de communication sans fil (360), la SSI indiquant un mécanisme pour sélectionner la cellule de référence, la cellule de référence étant l'une parmi la cellule de desserte et les cellules voisines ;
mesurer un temps d'arrivée, TOA, d'un signal associé à la cellule de desserte (320, 330, 340) et un TOA d'une cellule voisine ;
sélectionner la cellule de référence (320, 330, 340) à utiliser pour calculer la position du dispositif de communication sans fil (360) sur la base de la SSI, la SSI indiquant au dispositif de communication sans fil (360) de sélectionner comme cellule de référence (320, 330, 340) la cellule (320, 330, 340) qui correspond à un TOA minimum en combinaison avec au moins une parmi une correspondance à une erreur de TOA minimum estimée, un écart de retard minimum, une cellule de référence précédemment sélectionnée et une ligne de visée ; et
calculer une différence des TOA mesurés à partir du TOA de la cellule de référence sur la base de la sélection de la cellule de référence (320, 330, 340), dans lequel la différence des TOA mesurés est une différence de temps de signal de référence, RSTD ; et
fournir la différence calculée des TOA au nœud de réseau (310) pour que le nœud de réseau (310) calcule la position du dispositif de communication sans fil (360) sur la base de la différence calculée des TOA.
